# EUROPEAN PATENT SPECIFICATION

(11) **EP 1 264 484 B1**
(45) Date of publication and mention of the grant of the patent: **11.10.2006**
(21) Application number: 01920276.1
(22) Date of filing: 08.03.2001
(51) Int. Cl.: H04N 7/173

(54) **CABLE TELEVISION PAYMENT AND LOAD SYSTEM USING SMART CARD**
CHIPKARTEN VERWENDENDES SYSTEM ZUM BEZAHLEN UND LADEN IM KABELFERNSEHEN
SYSTEME DE PAIEMENT ET DE CHARGEMENT POUR TELEVISION PAR CABLE UTILISANT UNE CARTE A MICROPROCESSEUR

(30) Priority: 10.03.2000 US 523373
(43) Date of publication of application: 11.12.2002
(60) Divisional application: 02017779.6
(73) Proprietor: VISA INTERNATIONAL SERVICE ASSOCIATION, Foster City, CA 94404-2172 (US)
(72) Inventor: CUTINO, Suzanne, C., Reno, NV 89509 (US); DAVIS, Virgil, M., Los Altos, CA 94024 (US); ROBERTS, Shay, San Francisco, CA 94118 (US)
(74) Representative: Finnie, Peter John
(86) International application number: PCT/US2001/007615
(87) International publication number: WO 2001/076251

(56) References cited:
- WO-A-00/04717
- WO-A-01/08113
- WO-A-01/09851
- WO-A-98/43427
- WO-A-98/49658
- US-A- 5 392 353
- US-A- 5 790 677
- US-A- 5 883 810

## Description

### FIELD OF THE INVENTION

The present invention relates generally to a payment and value loading system using a computer network. More specifically, the present invention relates to a payment and value loading system for a smart card using an open network such as the Internet and a set-top box.

### BACKGROUND OF THE INVENTION

With the explosive growth in open networks (such as the Internet) over the past several years and the rapid increase in the number of consumers with access to the World Wide Web, there has been a great deal of interest in the development of electronic commerce on the Internet. Traditional financial transactions are being transformed.

A technique for performing financial transactions uses a smart card. A smart card is typically a credit card-sized plastic card that includes a semiconductor chip for holding the digital equivalent of cash directly, instead of pointing to an account or providing credits. A smart card may include a variety of hardware and software such as a microprocessor, random access memory (RAM), read-only memory (ROM), nonvolatile memory, an encryption module, and a card reader interface that includes the software and hardware necessary for communication with the outside world. However, a smart card may be implemented in many ways, and need not necessarily include a microprocessor or other features. The smart card may be programmed with various types of functionality, such as a stored-value application; credit/debit; loyalty programs, etc. In addition, the card may store a variety of information which might include a card identification number, a personal identification number, authorization levels, cash balances, credit limits, etc.

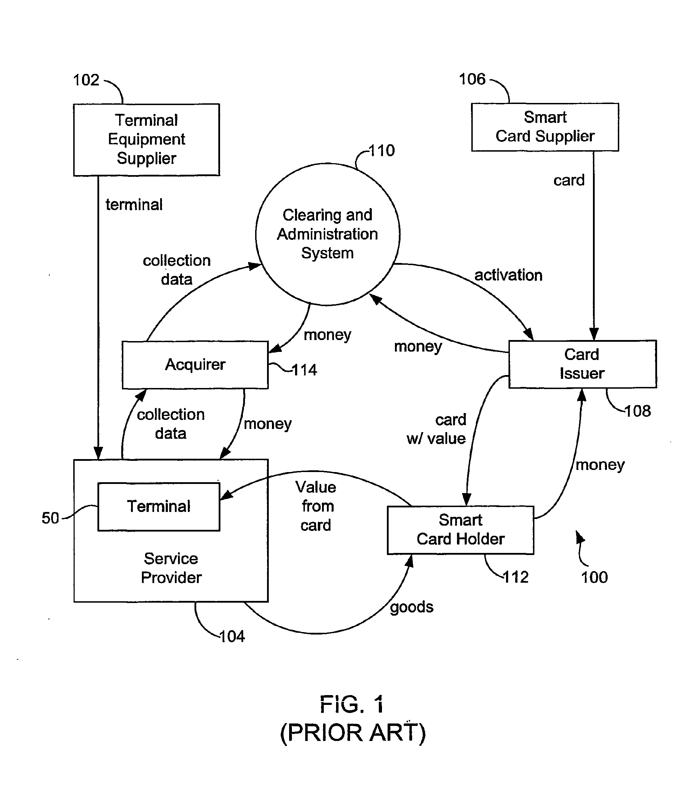

FIG. 1 illustrates an environment 100 useful for issuing a smart card (i.e., a smart card including a stored-value application) and reconciling transactions performed with such a card. One possible use of a smart card by a consumer is through the use of a customer operated service payment terminal 50. A customer typically uses such a service payment terminal 50 in a face-to-face environment in order to purchase goods in a store or directly from the terminal itself. A service payment terminal 50 can be an attended device or it can be integrated into a self-service device such as a vending machine or public telephone. For example, the service payment terminal 50 may be incorporated into a soda machine in order to dispense sodas to a customer in which the customer pays by inserting the smart card. Or, the service payment terminal 50 may be a point-of-sale terminal such as is found at a check-out counter where a customer inserts his smart card in order to purchase goods. The user may therefore be provided with a good and/or service once an appropriate value has been deducted from the smart card.

Such a service payment terminal 50 allows a customer to use a smart card for the payment of goods and/or services, generates a payment result from a transaction, and bundles individual payment results into a collection for transfer to a clearing and administration system, which then transfers funds that had been debited from a customer's smart card to the merchant whose goods and/or services had been purchased from the terminal.

As shown in FIG. 1, a terminal supplier 102 builds the equipment used by a service provider 104 to provide goods and/or services to customers having a smart card at a service payment terminal 50. Card Supplier 106 contracts with an integrated circuit manufacturer and a card manufacturer for integrated circuits and plastic card bodies, then embeds the integrated circuits into the cards and initializes them with a serial number. It then delivers the cards to card issuer 108. In conjunction with clearing and administration system 110 (such as a system provided by Visa International of Foster City, CA), card issuer 108 personalizes new cards and then transfers these cards to individuals (cardholders 112). The cardholder may then charge the card with value prior to use. Alternatively, the card may come with value already loaded. The cardholder 112 may then use the card at a service payment terminal 50 to purchase goods and/or services from service provider 104. Terminal 50 then debits the value from the card, thus creating a service payment.

A concentration point is a staging computer that communicates with any number of service payment terminals to collect batches of transactions. The concentration point then sends these transaction batches to a clearing and administration system for processing. Once processed, batch acknowledgments, along with other system updates are sent to the terminals via the concentration point. The concentration point ensures a successful transfer of data between service payment terminals and the clearing and administration system, and prevents overloading of the clearing and administration system. The service provider contracts with a concentration point for collection of the service payments. The concentration point may also be an existing central facility such as a telephone company that collects its own payments from card telephones.

Periodically, all transactions are sent in a data file from terminal 50 via a concentration point and an acquirer 114 to clearing and batch administration system 110 along with accumulated service payment batches from other terminals. Based upon this collection data, clearing and administration system 110 then receives money from card issuer 108 which had originally come from cardholder 112. Clearing and administration system 110 then transfers a lump sum to acquirer 114 using a suitable settlement service (such as one provided by Visa International) to pay the various service providers having a relationship with acquirer 114. Based upon the previous collection data, acquirer 114 then transfers an appropriate amount of money to each service provider 104 reflecting the value of the goods and/or services that that service provider had provided that day to cardholders based upon deductions from their smart cards.

Thus as described above, a variety of goods or services may be purchased using a smart card from a merchant having a terminal 50, or over the Internet using a technique such as described in U.S. patent application No. 08/951,614 referenced above.

However, in order to purchase using a stored value portion of a smart card, the card must be loaded with value first. Value can be loaded onto a smart card in a variety of ways. Currently, it is inconvenient for a user to load value onto his or her smart card. A user must physically travel to a bank or other institution that has an automated teller machine (ATM) or other similar device in order to load value on to his or her smart card. The user can insert money into the machine and have a corresponding value put onto the smart card, the user can use a debit card to deduct value from the user's account at the bank for transfer to the card, or a credit card can be used as the source of funds to be transferred to the smart card. In either case, the user must travel to the bank to load value. Further creating difficulty is that not all banks or other financial institutions have such a machine for loading value onto a user's smart card. One technique for loading value onto a smart card is described in U.S. patent application No. 09/070,488 referenced above.

A user encounters similar inconveniences during purchase transactions using a smart card. One example is that of purchase transactions related to goods and/or services made available by a cable provider through a television receiver or set-top box. For instance, when a user wishes to view a pay-per-view movie, the user must typically call a telephone number to provide his or her credit card number. Similarly, when a user wishes to make a purchase (e.g., via the cable provider's shopping channel), the user must typically call a telephone number to provide the necessary information (e.g., card number) to complete the purchase transaction. In either of these examples, the user must use his or her telephone to complete the transaction, preventing the user from using his or her telephone for other purposes during this time period. Thus, the process of completing a purchase transaction using a smart card is time consuming as well as inconvenient. In addition, because the user is billed later for any programming, goods and/or services from a cable provider, the eventual bill can be extremely high and may be a shock to the user.

WO98/43427 discloses a system for purchasing pay-per-view material whereby the user may insert a credit or debit card into a set top box. However, the user is still required to enter information, typically a PIN, to effect the transaction. Additionally, such a system requires a high degree of integration of the set-top box into the authentication system operated by the provider of the credit or debit card.

Even those purchase transactions processed over the Internet can be frustrating to even the most savvy computer user. For instance, each purchase transaction typically requires the entry of a variety of identifying and billing information. At a minimum, such transactions typically require the entry of a card number, name and billing address. As a result, even transactions performed over the Internet can be painfully time consuming and tedious.

Accordingly, it would be desirable to have a technique to allow, a user to conveniently and easily load value onto a smart card. Moreover, it would be beneficial if a technique were provided to allow a user to conveniently and easily complete a purchase transaction using a smart card. In particular, loading value and purchasing using a smart card in conjunction with a set-top box would be desirable.

### SUMMARY OF THE INVENTION

In accordance with a first aspect of the invention which is set out in claim 1 there is provided a loading system for loading an indication of value over a network onto a smart card, said loading system comprising: a bank server in communication with said network, said bank server arranged to debit a user account by an indicated value; a cable head end server in communication with said network; a set-top box in communication with said cable head end server, said set-top box including a card reader for communicating with a smart card and an input device for indicating a value to be debited from said user account, said smart card being arranged to verify a cryptographic signature; and a load server distinct from said bank server and in communication with said network, said load server including an interface for communicating with a security module that secures said loading of an indication of value onto said smart card, said security module being arranged to receive a load request including a smart card signature and to generate a load command destined for said smart card that includes said cryptographic signature, said security module being further arranged to transmit a confirmation message to said bank server over said network, thereby assuring that said smart card has been loaded by said indicated value, wherein said network is the Internet, said bank server includes a bank web site for accepting a load request, and said cable head end server and said bank server are at separate locations and communicate over said internet.

In accordance with a second aspect of the present invention which is set out in claim 8 there is provided a computer-implemented method of loading a smart card over a network, comprising: transmitting over a network from a cable head end server to a bank server a request to load a smart card with an indication of value, said smart card being in communication with a set-top box; receiving from said bank server a verified indication of load value; sending a load request to a load server connected to said network, said load server being distinct from said bank server; receiving a load command from said load server at said cable head end server, said load command being generated under the control of a security module and including a cryptographic signature; verifying said cryptographic signature by said smart card; sending said load command to said set-top box; loading said smart card by said indication of load value; and sending confirmation information to said bank server, whereby said bank server is assured that said loading is a success, wherein said network is the Internet over which said recited steps of said method occur, wherein said bank server includes a bank web site for accepting a load request, and wherein said cable head end server and said bank server are at separate locations.

The set-top box controls the interaction with a consumer and interfaces to a card reader which accepts the consumer's smart card and allows loading and debiting of the card. For the purposes of this description, a smart card with a stored-value application used in embodiments of the invention will be referred to simply as a"smart card."

The present invention allows the consumer to conveniently load value on to his or her smart card from the set-top box via the Internet. Through the use of a set-top box, a consumer may connect to his bank or other financial institution. Using appropriate message integrity, value may be transferred from the bank to the consumer's smart card. At the same time, the corresponding value may be transferred from the bank to the smart card issuer through existing networks for later settlement with a merchant from whom the consumer purchases goods or services. Advantageously, this may make use of an existing clearing and administration system for eventual settlement of the transaction between the merchant and the card issuer. Also, the transaction may be fully auditable and a log of previous transactions may be stored on the card for later display. Thus, a consumer may conveniently load value on to his or her card while a high level of security is maintained and the card issuer can take advantage of unspent funds on the card.

From the consumer's perspective, the present invention operates in a fashion similar to loading a smart card at an ATM machine, except that the consumer need not insert cash or an additional debit or credit card, nor need travel to a bank. The loading functionality is distributed across the Internet between the card reading device located where the customer is, a bank server holding the consumer's account, and a load server with a host security module that provides security. All of these entities may be physically remote from one another with router functionality being provided by the Internet.

From the consumer's perspective, the present invention is easy to use. A consumer need not establish a new relationship with a bank or other Internet service company, nor create a special Internet deposit account in order to load value onto a smart card over the Internet. A consumer simply makes use of his or her bank account and currently available smart cards in order to load value using any conveniently available computing device with a card reader and Internet access.

In addition, once value has been loaded onto the smart card, a consumer may complete a purchase from a merchant via the Internet. It is important to note that an existing clearing and administration system may be used to reconcile the transaction and to pay the appropriate parties once the value has been spent. Advantageously, a new system and methodology for reconciling transactions need not be developed or implemented. The pre-existing clearing and administration system may be used which greatly simplifies implementation of the present invention. A participating bank or holder of a pre-funded account need not implement or become familiar with new procedures for reconciliation of transactions.

Furthermore, a bank or holder of a pre-funded account need only make a minimal investment in time and money to take advantage of the present invention in order to allow its customers to load value from their existing accounts (e.g., via the Internet). The bank need not engage in the development of complex custom software or accounting procedures. By incorporating software libraries, a bank is ready to begin loading value onto its customer's cards from its web site. Preferably, libraries are provided that interface with an existing server at a bank to facilitate the building of an HTML page. Because a smart card with a stored-value application is used, the bank server, load server and cable head end server perform the details of the transaction and the bank itself is relieved from having to control and keep track of a transaction. Also, the load server and smart card manage and provide security for the transaction. I.e., the bank need not be concerned about security nor be responsible for authenticating a smart card nor for determining a balance on the card. Of course, a load server could coexist alongside the bank server or could even be the same computer. That is, a bank could implement load server functionality at its own site if it so desired. In a preferred embodiment, the load server and its security module is provided by a separate financial institution or by a third-party processor.

The present invention also provides benefits to issuers and acquirers. Expansion of the functionality for a smart card increases revenue opportunities from cardholders and merchants. In addition, in one specific embodiment of the invention, funds that are loaded onto a card are transferred from the loading bank to the card issuer so that the issuer may take advantage of the funds on the card until they are spent.

The present invention is suitable for use with any type of smart card that is able to store an amount and to load a value upon a command. In one embodiment of the invention, a smart card implemented as a processor card works well. Use of a processor card has advantages where information processing is done on the card rather than in the terminal or host computer. Processor cards allow encryption to be done by the card, allow generation of signatures, and can accommodate multiple passwords or personal identification (such as biometrics that uniquely identify the holder of the card). Processor cards also provide increased data security, an anti-fraud capability, flexibility in applications, a multi-purpose capability, and off-line validation. Because high telecommunication costs and/or low reliability of a network may make on-line authorization impractical; a smart card with the capability for performing off-line processing and authentication by itself is extremely valuable.

### BRIEF DESCRIPTION OF THE DRAWINGS

The invention, together with further advantages thereof, may best be understood by reference to the following description taken in conjunction with the accompanying drawings in which:
FIG. 1 is a prior art diagram of an example of a clearing and administration system useful for reconciling financial transactions received from a service payment terminal.
FIG. 2 illustrates an architecture and system for payment over the Internet via a set-top box using a smart card.
FIG. 3 illustrates an architecture and system for loading value onto a smart card via a set-top box.
FIG. 4 illustrates a first payment embodiment of the present invention.
FIG. 5 illustrates an alternative embodiment of the present invention in which the security card releases earlier.
FIG. 6 illustrates yet another alternative embodiment of the present invention having fewer round trip messages between the cable head end server and payment server.
FIG. 7 illustrates still another alternative embodiment of the present invention in which the merchant server compares smart card signatures.
FIG. 8 illustrates an added encryption layer useful for embodiments of the present invention.
FIG. 9 is a flowchart describing a user's perspective of a smart card purchase transaction in accordance with a first payment embodiment of the present invention.
FIGS. 10A-10D are a flowchart describing the processing of a user purchase using the first payment embodiment of the present invention.
FIG. 11 is a flowchart describing the alternative embodiment of FIG. 6.
FIG. 12 is a flowchart describing the alternative embodiment of FIG. 7.
FIG. 13 is a flowchart describing the alternative embodiment of FIG. 8.
FIGS. 14A and 14B are a flowchart describing the added security layer of FIG. 9.
FIGS. 15A-15D are a flowchart describing the loading of value onto a consumer's smart card in accordance with a first load embodiment of the present invention.
FIG. 16 is a flowchart describing a user's perspective of a smart card purchase transaction in accordance with a second payment embodiment of the present invention.
FIGS. 17A-17D are a flowchart describing the loading of value onto a consumer's smart card in accordance with a second load embodiment of the present invention.
FIG. 18 is a block diagram of a typical computer system suitable for use in embodiments of the present invention.

### DETAILED DESCRIPTION OF THE INVENTION

### GENERAL PAYMENT AND LOAD ARCHITECTURE

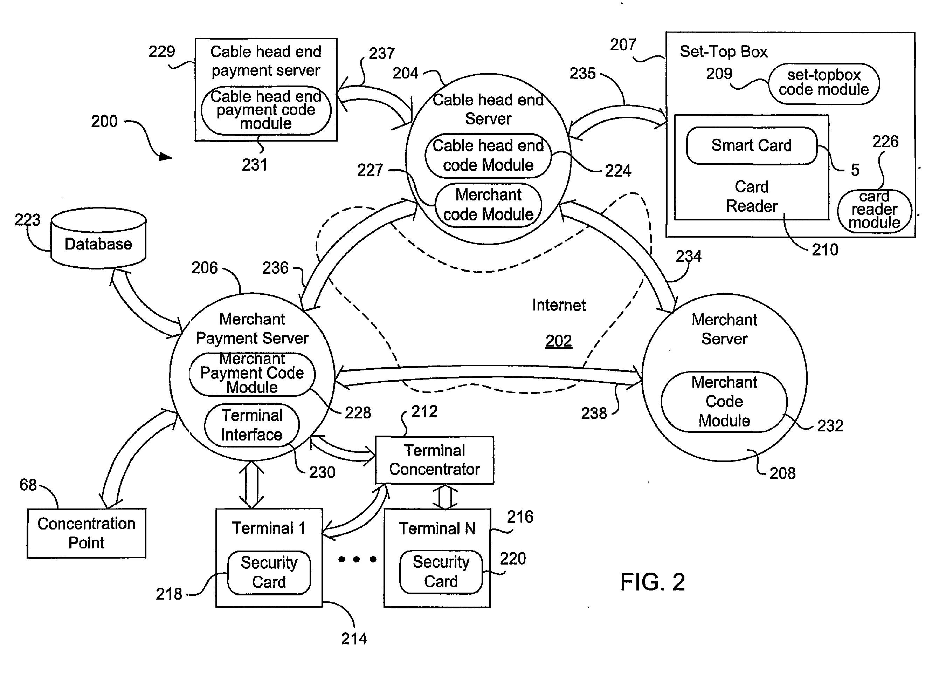

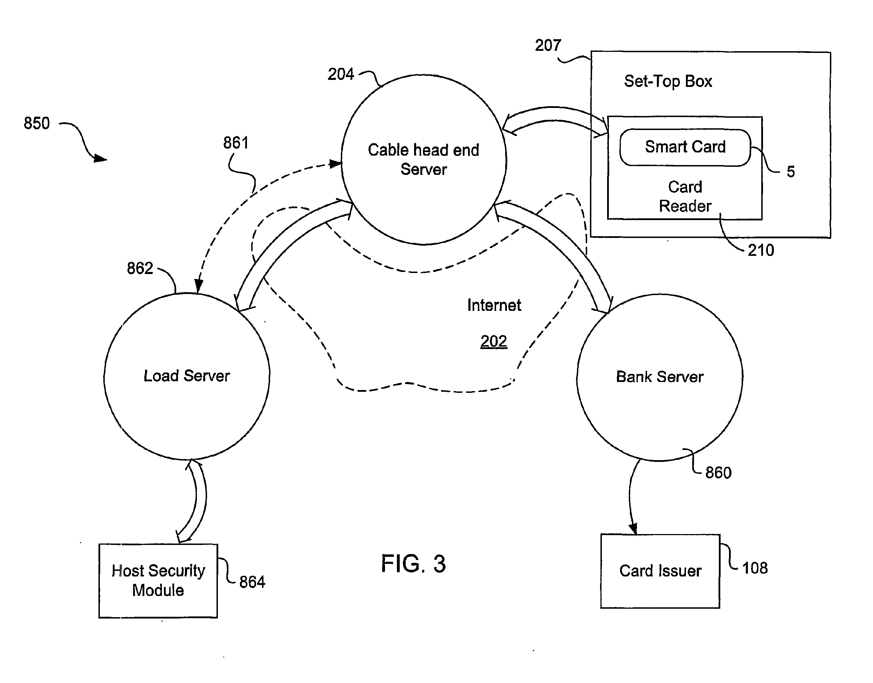

The present invention separates the functionality involved in a transaction using a smart card in order to take advantage of the routing capabilities of the Internet as well as the capabilities and convenience of a set-top box. FIG. 2 illustrates symbolically an architecture 200 for a payment system involving a smart card A system for loading value onto a smart card is shown in FIG. 3 and may have similar functionality as described below. Shown is an internet 202, a set-top box 207, a cable head end server 204, a cable head end payment server 229, a merchant payment server 206 and a merchant server 208. Local cardholder functions including a consumer card interface, display and accept/cancel options are performed at set-top box 207.

A user may wish to purchase goods and/or services from a merchant via the internet or, alternatively, directly from a cable provider. According to a first embodiment enabling purchase transactions to be processed via the internet, payment functions including security card control, data store and use of a concentration point are performed by merchant payment server 206. In addition, the presentation and eventual delivery of goods and/or services by a merchant are performed under control of merchant server 208. The internet 202 performs routing functions between various entities as shown. It should be appreciated that internet 202 may take the form of the Internet currently in use, or may also be any other open network implemented using any combination of computer, telephone, microwave, satellite, and/or cable networks.

Basically, set-top box 207 controls the interaction with a user and interfaces to the cable head end server 204, which enables purchase transactions to be processed by either cable head end payment server 229 for purchases made directly from a cable provider or a merchant payment server 206 for purchases made via the Internet. The set-top box 207 includes a card reader 210, a set-top box code module 209, and a card reader module 226. Reader module 226 may be implemented using any suitable software and libraries for communicating with card reader 210 and its actual implementation will depend upon the type of card reader used. Set-top box code module 209 is responsible for controlling the set-top box as well as controlling displays to the user and for the interaction between the card and the card reader. The module also builds the draw request message after receiving all of the start-up information from the card and the amount of the purchase from the merchant server.

The card reader 210 accepts a smart card 5 having a stored-value application. Card reader 210 is any suitable interface device that functions to transfer information and commands between cable head end server 204 and smart card 5. By way of example, card reader 210 may be a card reader manufactured by Fischer-Farr International of Naples, Florida, by Hewlett-Packard of Palo Alto, California, by Schlumberger, by Gem Plus, etc. Card reader 210 may take any variety of forms such as a stand alone unit, integrated with the cable head end server, attached to the keyboard of the cable head end server, or even built in to a floppy disk-sized unit capable of being read from a disk drive of the cable head end server, etc.

According to the first embodiment, merchant payment server 206 communicates directly with a terminal or through a concentrator 212 that handles any number of terminals 214-216 each having a security card 218 and 220 respectively. Merchant payment server 206 also communicates with concentration point 68 for transmission of transaction data to a clearing and administration system. Database 223 stores all suitable information passing through merchant payment server 206 for each transaction. Use of such a database allows any number of merchants (or merchant servers) to use merchant payment server 206 for transactions. Merchant payment server 206 controls payment functions such as handling the attached terminals, managing data base 223 and collection functions. Merchant server 208 is a site that has contracted with an acquirer to accept smart card transactions as payments for goods and/or services purchased over the Internet.

Smart card 5 may take a variety of forms and is useful in many situations where it is desirable to store monetary value on a card that a consumer may use. In general, a smart card is any card or similar device that is able to store a value that is decremented when the card is used. The card may be purchased complete with a smart or value may be later added to the card by a user. Such cards may also have their value replenished. Of course, a smart card need not be in the form of the traditional credit card, but could appear in any form and of any material that is able to store value and be manipulated by a user for a payment transaction. By way of example, other forms that a smart card may take are any electronic representations. Further, the functionality of smart card 5 may be implemented in software on cable head end server 204, that is, card 5 may be a "virtual" card.

A smart card may also perform a variety of functions in addition to simply storing value. A card may be dedicated to the storing value or may contain memory and programs for other applications as well. By way of example, an "electronic wallet" refers to a processor card that can execute a variety of financial transactions and identification functions. Such a card may serve debit, credit, prepayment, and other functions. A smart card typically includes information such as a bank identifier number, a sequence number, a purchase key, a load key, an update key, an expiration date, a transaction counter, a session key, etc., in addition to a running balance.

A smart card may also be termed a prepayment card, a cash card, or a decrement-in-value card. A smart card may also be implemented by using a variety of card technologies. By way of example, a smart card is typically implemented as a card containing one or more integrated circuits. One example of an integrated circuit card is a memory card that has a semiconductor device for storing information but lacks calculating capability. Another example of an integrated circuit card is a processor card that has not only memory but also a microcontroller to enable the card to make decision. A processor card may also be termed a microprocessor card or a "smart card".

A processor card may include an encryption module in order to provide a variety of security precautions. By way of example, security precautions may include simple PIN numbers, biometrics, simple algorithms, or sophisticated algorithms such as the Data Encryption Standard (DES) or Rivest, Shamir, Adelman (RSA) encryption. The card is thus able to use these precautions to verify users, card readers, etc., to validate security cards and/or to provide a unique signature. Preferably card 5 includes any number of keys known to the card issuer that are used during the course of a payment or load transaction to generate signatures for validation of the smart card, validation of the security card or module, and validation of the system itself.

According to a second embodiment, purchases may be made directly from a cable provider using both a cable head end server 204 and cable head end payment server 229. Cable head end server 204 may be any suitable computer for communicating over a network to a set-top box, a payment server or a merchant server. By way of example, cable head end server 204 may be a mainframe computer, a work station, or a personal computer. Furthermore, cable head end server 204 may also be embodied in any portable device such as a laptop computer, a cellular telephone, or any variety of a personal digital assistant (PDA) such as those made by Apple Computer, Inc. or by U.S. Robotics.

Cable head end server 204 includes cable head end code module 224. Cable head end module 224 controls communication between the cable head end server, the set-top box and card reader, the payment servers (cable head end payment server 229 and merchant payment server 206) and the merchant server. Cable head end module 224 may be implemented using any suitable code. In one embodiment of the invention, cable head end module 224 is implemented using a combination of "C" code and a Java applet. The applet is also supplemented with parameters from an HTML page sent from the merchant server. It is contemplated that Java code works well for implementing the modules on the cable head end, payment and merchant servers because it is platform independent, and could even replace the "C" and "C++" code used. The cable head end module 224 is able to communicate with all components on the Internet, either directly or indirectly.

The cable head end server 204 is the main channel providing content to the associated set-top boxes. As a central cable facility, it effectively controls at least a portion of the information received by each set-top box to which it connects. Thus, the cable head end server 204 handles messages to and from one or more set-top boxes to which it is connected. The cable head end server therefore performs formatting and routing functions to ensure that the protocol implemented by the cable provider is complied with and the messages are received by the appropriate parties. For instance, since the cable operator may contract with an Internet Service Provider (ISP) to provide it with an Internet connection, the cable head end server 204 may provide translation between the proprietary protocol that the cable company implements and the Internet Protocol. It is also important to note that the cable head end server 204 enables interaction between each set-top box and the appropriate payment server, as will be described below. For instance, the payment server may vary depending upon whether the transaction is performed via the Internet or directly through a server associated with the cable provider.

In addition, the cable head end server 204 may also include a merchant code module 227, which may be implemented similarly to a merchant code module 232 of a merchant server 208, which will be described in detail below. More particularly, certain transactions may be performed over the internet 202 via an appropriate merchant server 208. For instance, airline tickets, clothing, and other goods may be purchased over the internet 202. However, some goods and/or services may be offered only by the cable provider. As one example, pay-per-view movies are often made available to television viewers by the cable provider. As another example, a shopping channel is typically offered by the cable provider, which enables the television viewer to purchase goods via the cable head end server 204. Merchant code module 227 may therefore process these transactions and may be implemented using any suitable code. By way of example, merchant code module 227 may be implemented using a combination of Perl, HTML, and Java code.

Payments made in association with transactions processed by the cable head end server 204 may be processed via a dedicated server. More particularly, cable head end payment server 229 includes cable head end payment code module 231. The cable head end payment server 229 processes payment transactions made through the cable head end server 204. As described above, these transactions include, but are not limited to, pay-per-view movie transactions and transactions via the cable provider's shopping channel. In addition, cable head end payment server 229 may be designed to facilitate the communication between the user's smart card and a terminal's security card (not shown to simplify illustration). The communication between the user's smart card and a terminal's security card will be described in further detail below with reference to merchant payment server 206. If a part of a transaction fails to complete, the cable head end payment server 229 may notify the participating system components.

Traditionally, a cable provider must maintain its own billing system. This requires the employment of billing employees as well as employees to perform other related functions such as customer service. As will be further described with reference to the following figures, through the processing of information obtained from a smart card 5 at a set-top box, the cable provider may transfer the burden of billing onto third parties such as credit card companies. In this manner, money owed to the cable provider may be effectively collected immediately from the credit card companies rather than at the end of a billing cycle.

Merchant payment server 206 includes merchant payment code module 228 and terminal interface 230. As with cable head end server 204, merchant payment server 206 may be implemented using any suitable computer. By way of example, a personal computer works well. There may be one payment server for each merchant server or a single payment server may service any number of merchant servers. Alternatively, there may be multiple payment servers for a single merchant. In addition, merchant payment server 206 need not be remote from merchant server 208 but may be located at the same site and have a different Internet address, or the payment server and the merchant server may even be implemented on the same computer. Merchant payment server 206 is designed to facilitate the communication between the user's smart card and a terminal's security card. If a part of a transaction fails to complete, the payment server may notify the participating system components.

Merchant payment module 228 may be implemented using any suitable code. By way of example, merchant payment module 228 is implemented using a combination of "C" code, "C++" code and Java code. Merchant payment module 228 is, in one specific embodiment, a multi-threaded process that can service multiple concurrent cable head end applet transactions on demand. The module is responsible for controlling all interactions with the terminals and their concentrator including the transaction collection function. For individual transactions, the payment module controls the message flows and logs interim results. When an applet connects with the payment server, it creates a transaction thread to support the transaction through its life cycle. Each thread, in turn, assigns a terminal for communication. Having a one-to-one correspondence between transaction threads and terminals has been found to provide desirable results.

Terminal interface 230 is any suitable set of software and libraries for communicating with a terminal 214 either directly or, as shown, through terminal concentrator 212. The actual implementation of terminal interface 230 will depend upon the type of terminal used. A terminal such as 214 may be any suitable terminal such as are known in the art. By way of example, an iq Delta 2010 terminal made by Schlumberger has been found to provide desirable results. Such a terminal may support a variety of commands originating from the terminal interface. These commands emulate the normal responses that an attached terminal would pass from the smart card to the security card. The actual security card commands are held in the terminal while the terminal performs the tasks necessary to simulate the presence of a smart card.

Security card 218 may be any suitable security card such as are known in the art (often referred to as a Purchase Secure Application Module--PSAM). In other embodiments, the functionality of security card 218 can be replaced by a hardware security module, could be implemented in hardware within the payment server, or could even be implemented in software.

By way of example, security card 218 is a removable credit card-sized processor card that is programmed to process and store data relating to financial transactions. Security card 218 contains a microchip embedded in the card that enables the security card to authenticate and to validate the user's smart card. If a user smart card is accepted by the security card, and the smart card contains sufficient value, the security card guarantees that the merchant providing the goods and/or services receives payment according to the amount deducted from the smart card for the goods and/or services rendered. In a preferred embodiment, the security card also contains DES purchase security keys and authenticates the smart card during a purchase transaction and secures the payment and collection totals. A security card also stores signature algorithms for smart cards in use. A security card may also contain a transaction identifier for the current transaction, a financial sum of all transactions remaining to be settled, a session key, and master keys for all smart cards in use. Further, the security card may contain generations of keys, blocked card indicators, date of last update, multiple card programs, different currency rates and additional security.

Concentration point 68 is a staging computer that communicates with terminals to collect batches of purchase transactions. The concentration point then sends these transaction batches to a clearing and administration system for processing. Once processed, batch acknowledgments, along with other system updates, are sent back to the terminals via the concentration point.

Merchant server 208 includes a merchant code module 232. Merchant server 208 may be implemented upon any suitable computer capable of communicating with and presenting information to users over an internet. Merchant code module 232 may be implemented using any suitable code. By way of example, merchant module 232 may be implemented using a combination of Perl, HTML, and Java code. Merchant server 208 is typically a generic web server customized for the merchant's business. Merchant server 208 may include databases, CGI scripts and back-office programs that produce HTML pages for an Internet user.

A brief discussion of the flow of a transaction now follows. In accordance with the first embodiment in which a user performs a purchase transaction via internet 202, during a financial transaction, the cable head end server and merchant server exchange information 234 via internet 202. Each transaction initiated by a user has a transaction identifier created at the merchant server, and a merchant identifier unique to the payment server is also available from the merchant server. Cable head end module 224 and the payment server also use this unique transaction identifier for tracking and logging information about the transaction. Merchant server 208 generates a unique identification of the transaction, completes other required parameters, encrypts as appropriate, and builds an HTML page and sends it to the cable head end server. The set-top box 207 through card reader 210 interacts 235 with the smart card and cable head end module 224 builds a draw request message containing related card information, the purchase amount, and other information supplied by the merchant server or, alternatively, supplied by the merchant code module 227 of the cable head end server 204.

The cable head end server then communicates 236 with merchant payment server 206, first by forwarding the draw request to the payment server. Merchant payment server 206 verifies the transaction to determine if it is a valid transaction from a known merchant. The transaction is logged into the payment server's transaction database 223. Upon completion of a transaction, merchant payment server 206 builds a result message containing the identification of the transaction and signs it. The message is then routed to merchant server 208 via cable head end server 204. Merchant server 208 then validates the result message. After determining that the transaction was successful, merchant server 208 creates an HTML page for the purchased information and sends it to cable head end server 204. Alternatively, the merchant may also deliver purchased goods to the user at this point. It is also possible for the payment server and the merchant server to communicate information 238 directly between themselves. Preferably, as cable head end server 204 has already established communication with the merchant server and the payment server, links 234 and 236 are used to exchange information between the payment server and the merchant server, rather than establishing a new link 238.

According to the second embodiment, the cable head end server 204 acts as the merchant server and communicates with the cable head end payment server 229. Thus, the cable head end server 204 obtains information associated with the transaction (e.g., from an associated database) when initiated by a user-initiated transaction. Each transaction initiated by a user has a transaction identifier which may be created at the cable head end server 204 or the set-top box 207, and an identifier unique to the cable head end payment server 229 is also available from the cable head end server. Cable head end module 224 and the cable head end payment server also use this unique transaction identifier for tracking and logging information about the transaction. The set-top box 207 through card reader 210 interacts 235 with the smart card and cable head end module 224 builds a draw request message containing related card information, the purchase amount, and other information supplied by the merchant code module 227 of the cable head end server 204.

The cable head end server then communicates 236 with cable head end payment server 229, first by forwarding the draw request to the cable head end payment server 229. Cable head end payment server 229 verifies the transaction to determine if it is a valid transaction from a known cable provider. The transaction is logged into the payment server's transaction database (not shown to simplify illustration). Upon completion of a transaction, cable head end payment server 229 builds a result message containing the identification of the transaction and signs it. The message is then routed to cable head end server 204. Cable head end server 204 then validates the result message, which may be provided to set-top box 207. The cable provider may also deliver purchased goods to the user at this point. As shown, the cable head end payment server 229 and the cable head end server 204 may communicate information 237 directly between themselves rather than via the internet 202.

### LOADING A SMART CARD

FIG. 3 illustrates a system 850 for loading value onto a smart card according to one embodiment of the present invention. System 850 includes a cable head end server 204, bank server 860 and load server 862. Cable head end server 204 communicates with card 5 via card reader 210 in set-top box 207, and with bank server 860 and load server 862 over any suitable open network such as Internet 202. Suitable embodiments for the cable head end server, the card reader and the smart card are described above in the description of a payment technique. Preferably, each of cable head end server 204, bank server 860 and load server 862 implement a code module (similar in operation to the code modules described above) in the Java programming language that provides the functionality described below. For simplicity of explanation, reference will be made below to "cable head end server", "bank server" and "load server" even though the resident code is performing the functions. Card issuer 108 has been described previously in FIG. 1. Card issuer 108 may be a separate financial institution from the bank that includes bank server 860, or card issuer 108 may be the same bank that includes bank server 860.

According to a first embodiment, the card 5 is loaded through the use of the load server 862 and the bank server 860. Bank server 860 is any suitable computer within a bank or other financial institution. By way of example, bank server 860 is any suitable personal computer, a workstation or a mainframe computer. In one embodiment, bank server 860 runs a "servlet" program (a Java applet running on server) for communication with cable head end 204.

Load server 862 is also any suitable computer and may be located at a third party location (such as at a processor) or may be located within the same bank as bank server 860. Load server 862 also runs a servlet program for communication with cable head end server 204 and host security module 864. In an alternative embodiment, load server 862 and bank server 860 are the same computer which runs two different applications representing the functionality of each server.

Host security module (HSM) 864 is a device known in the art that may be embodied in a hardware "black box" or on any suitable computer. The host security module can be implemented in a hardware module outside of load server 862, can be implemented within load server 862, can be implemented in software, or can be implemented as a security card described above. Host security module 864 contains the encryption keys in hardware used for generating signatures (for example S1, S2 and S3) that provide security for the transaction. These signatures are used by smart card 5 and host security module 864 to insure that the card is not expired or counterfeit (i.e., is a valid card), to insure that module 864 is authentic, to insure that system 850 is authentic and, in general, to provide for a valid transaction and to prevent fraud. Card 5 also includes encryption keys for the generation of a smart card signature. In an alternative embodiment, module 864 could be replaced by a standard terminal that includes a security card such as is shown in the previous embodiments. In this situation, the encryption keys would be stored in the security card.

Briefly, system 850 operates as follows. A consumer accesses bank server 860 via cable head end server 204. Assuming that card 5 is not overloaded and that the user's account with the bank has sufficient funds, the user is able to download value via bank server 860 on to his smart card 5. Cable head end server 204 communicates with load server 862 to receive authorization for the load and for higher security. Card 5 may then be used to make purchases over the Internet as described earlier in the application or may be used for purchases elsewhere. Once the bank has downloaded value to card 5, a corresponding amount of funds is transferred from the bank to card issuer 108.

Card issuer 108 places these funds in a holding pool. Once smart card 5 is used to make a purchase from a merchant, the transaction is captured and settled through a settlement service, such as VisaNet. The issuer bank decrements the funds pool for the amount of the purchase, which is paid to the merchant bank. The merchant bank pays the merchant for the transaction. Settlement may occur in any suitable fashion such as is known in the art and, in particular, may be implemented as previously described in FIG. 1.

As described above, the first embodiment enables a bank to download value to smart card 5. However, it may be desirable to load value to smart card 5 from a pre-funded account rather than from a bank. Thus, according to a second embodiment, the card 5 may be loaded from a pre-funded account. As shown by dotted line 861, value may be loaded directly from load server 862 to cable head end server 204. Alternatively, value may be loaded from load server 862 to cable head end server 204 via the internet 202.

### DETAILED PAYMENT ARCHITECTURE

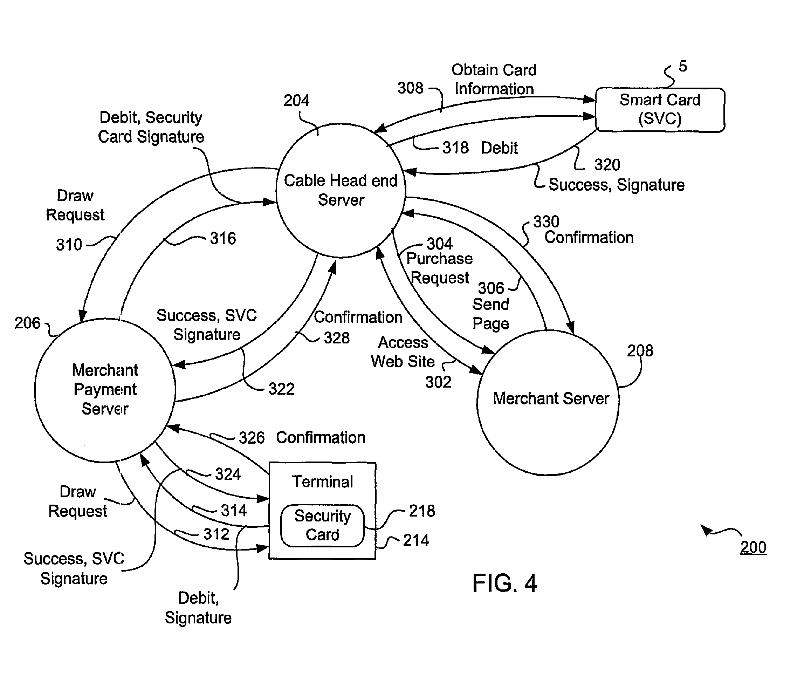

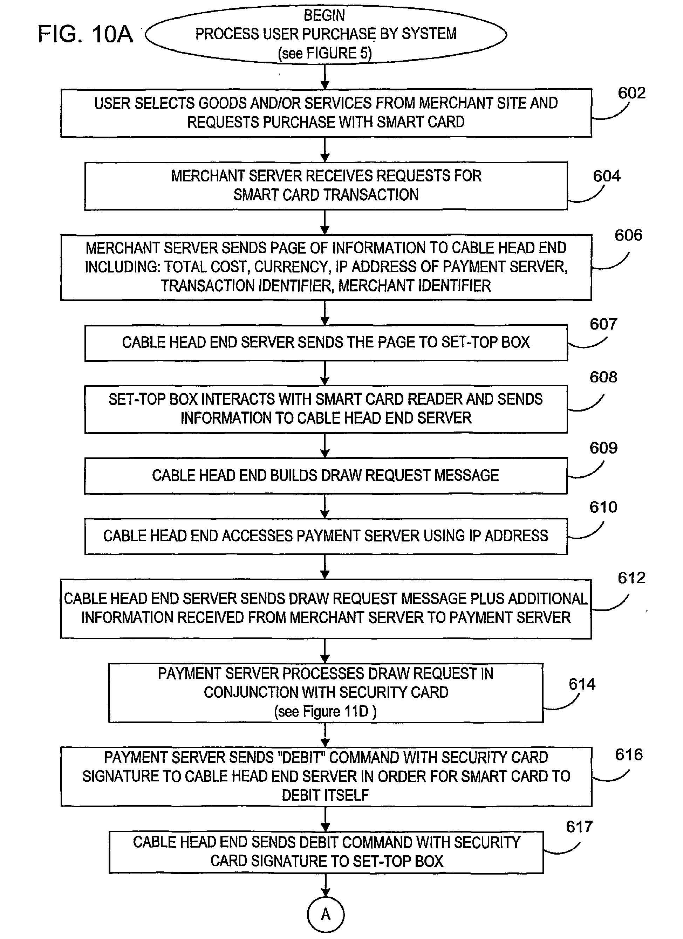

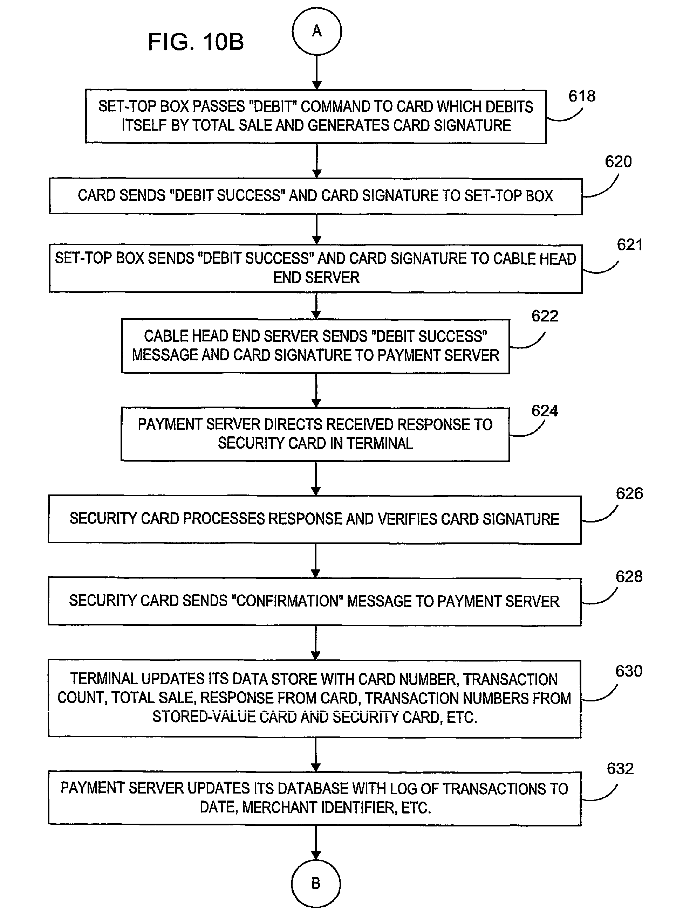

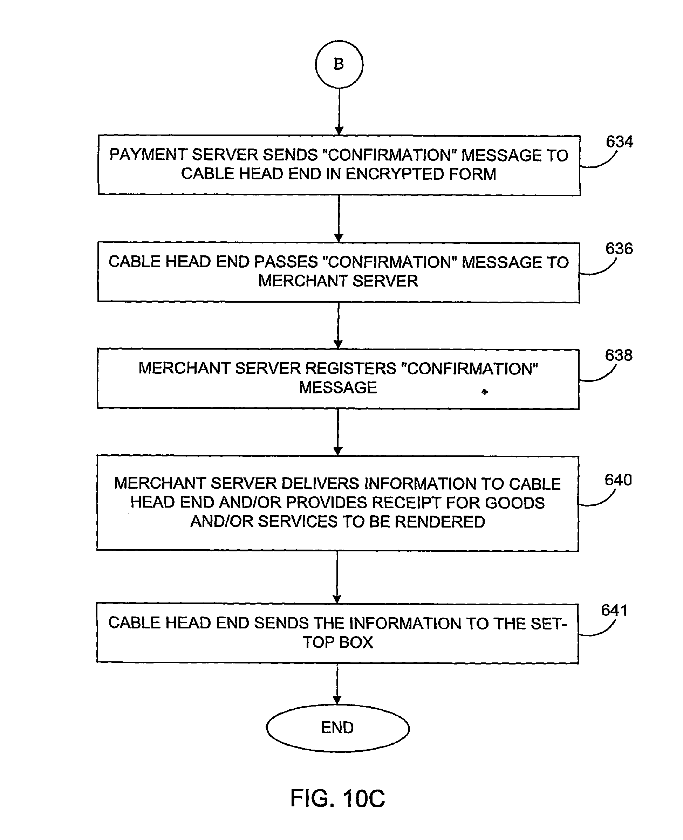

FIG. 4 illustrates a detailed embodiment of internet payment architecture 200 having cable head end server 204, merchant payment server 206 and merchant server 208. A smart card 5 is in communication with cable head end server 204, and a security card 218 inside a terminal 214 is in communication with merchant payment server 206. Not shown for simplicity in this figure are other elements of the system shown in FIG. 2. One embodiment of a technique by which a financial transaction may be completed over the Internet will be described in further detail with reference to FIGS. 10A through 10D.

### FIRST ALTERNATIVE PAYMENT EMBODIMENT

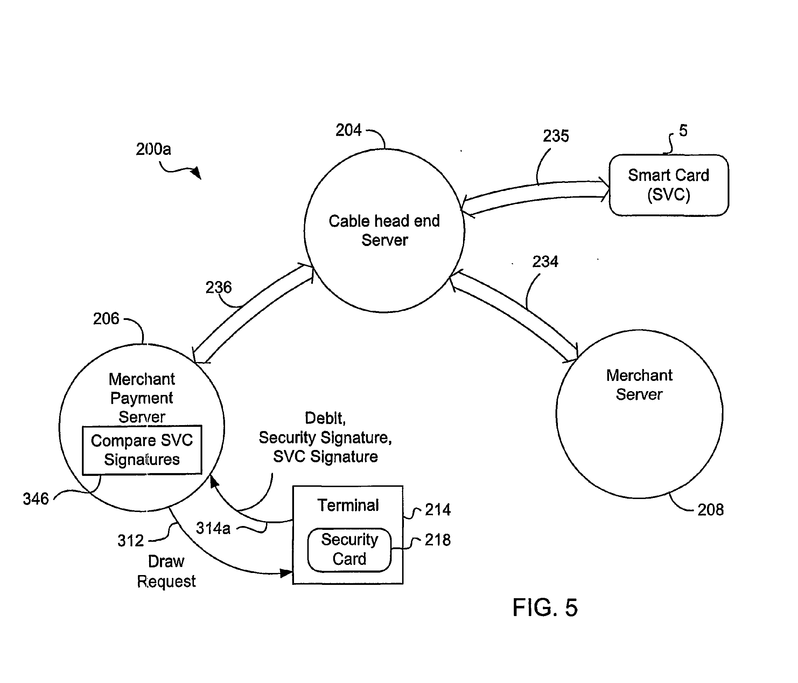

FIG. 5 illustrates an alternative embodiment 200a in which the security card is able to be released sooner than the security card of FIG. 4; this embodiment also requires fewer exchanges between the terminal and the payment server. A security card in a terminal is dedicated to a particular transaction from the moment when the terminal interface selects that terminal until the security card finally issues a "confirmation" message and is released by a terminal interface. Thus, in some circumstances it is desirable to release the security card earlier. By releasing a security card earlier, the card is tied up for a shorter time per transaction and may move on to the next transaction sooner. Also, the less time that a terminal is dedicated to a particular transaction, and the fewer messages exchanged between the two, the less likely chance there is of a communication error that might interrupt and halt the transaction.

Embodiment 200a includes a cable head end server 204, a merchant payment server 206, a merchant server 208, a smart card 5, and a terminal 214 having a security card 218. Communication between the various entities may take place in a similar fashion as in FIG. 4 as indicated by communication links 234, 235, and 236. However, instead of two round trips of information between the terminal and payment server, there is only one round trip in this embodiment.

### SECOND ALTERNATIVE PAYMENT EMBODIMENT

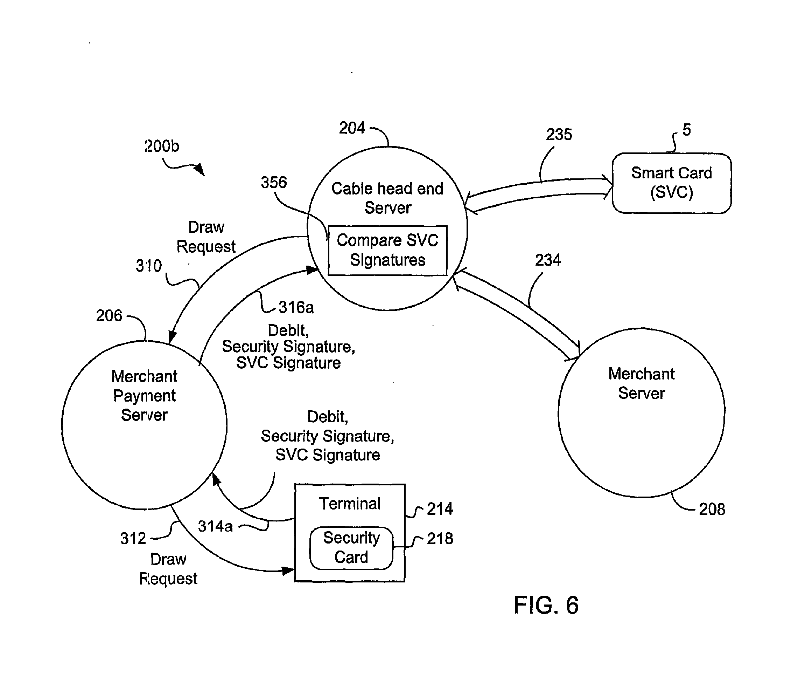

In another embodiment 200b of the present invention as illustrated in FIG. 6, not only is the security card allowed to release earlier, but the number of messages exchanged between the cable head end server and the payment server are reduced. Instead of comparing smart card signatures in the payment server, the expected smart card signature from the security card is transmitted to the cable head end server where a trusted agent 356 performs the comparison of the expected smart card signature with the actual signature received from smart card 5. Thus, message exchange between the cable head end server and the payment server is reduced to one round trip. This is advantageous in that the time for a transaction is reduced, the security card is released earlier and fewer message exchanges means more reliability over the Internet.

Embodiment 200b includes a cable head end server 204, a merchant payment server 206, a merchant server 208, a smart card 5, and a terminal 214 having a security card 218. Communication between the various entities may take place in a similar fashion as in FIG. 4 as indicated by communication links 234 and 235.

### THIRD ALTERNATIVE PAYMENT EMBODIMENT

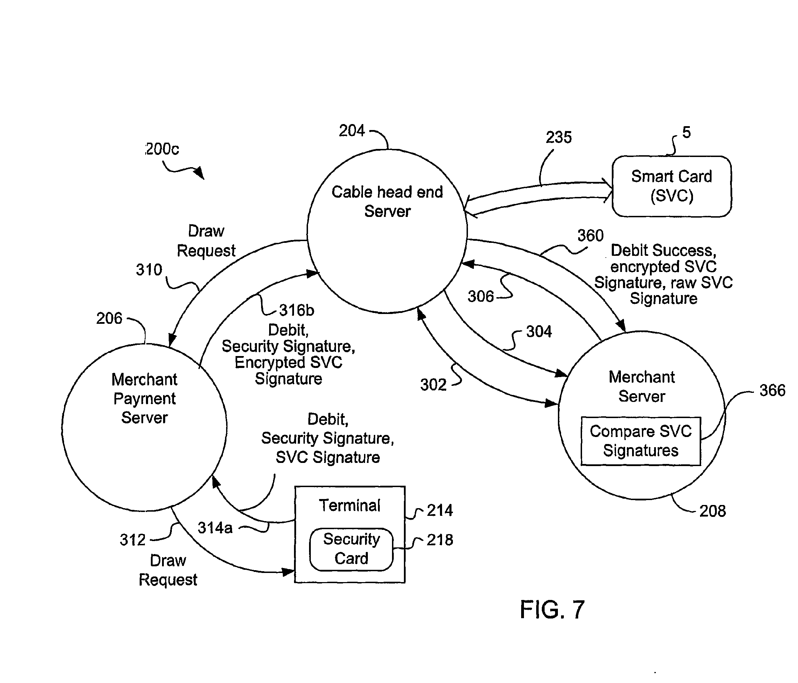

FIG. 7 illustrates another embodiment 200c of the invention in which the merchant server performs the comparison of the smart card signature with the expected signature. This embodiment has all of the advantages of the previous embodiment in which the security card is released earlier, and there are also fewer messages passed between the entities. In this embodiment, if the cable head end server is not to be trusted to compare the smart card signatures, then an encrypted signature is passed to the merchant server via the cable head end server. The cable head end server also passes the raw, unencrypted signature from the smart card to the merchant server. A routine 366 in the merchant server then compares the two signatures.

Embodiment 200c includes a cable head end server 204, a merchant payment server 206, a merchant server 208, a smart card 5, and a terminal 214 having a security card 218. Communication between the various entities may take place in a similar fashion as in FIG. 4 as indicated by messages 302-306 and communication link 235.

### ENCRYPTION LAYER EMBODIMENT

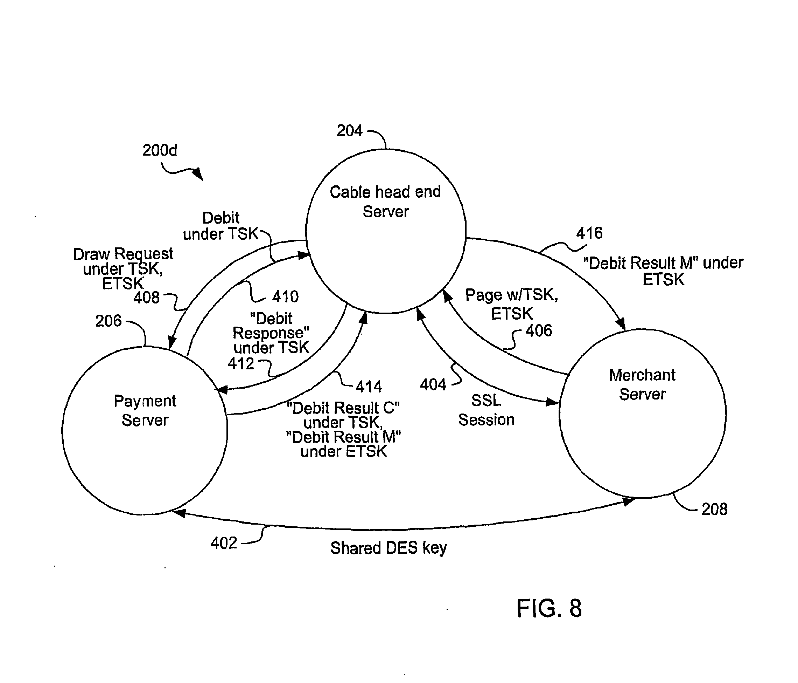

FIG. 8 illustrates an embodiment 200d of the present invention in which an encryption layer has been added. Although the present invention may be practiced without this added encryption layer, in a preferred embodiment of the invention, this encryption layer is used. FIG. 8 includes cable head end server 204, merchant payment server 206 and merchant server 208. Other elements of the architecture have been omitted in this figure for simplicity. This extra encryption layer is used not only to protect the contents of messages being transmitted over the Internet, but also to prevent a cable head end server, smart card or other entity from receiving or producing a message that would trick another entity into thinking that a valid transaction had occurred. This encryption also prevents messages from being accidentally or deliberately altered or misdirected.

It should be appreciated that encryption may be present in any embodiment on all parts of any message sent for security. Preferably, any signature sent over a network is encrypted.

### FIRST PAYMENT EMBODIMENT AND ALTERNATIVES

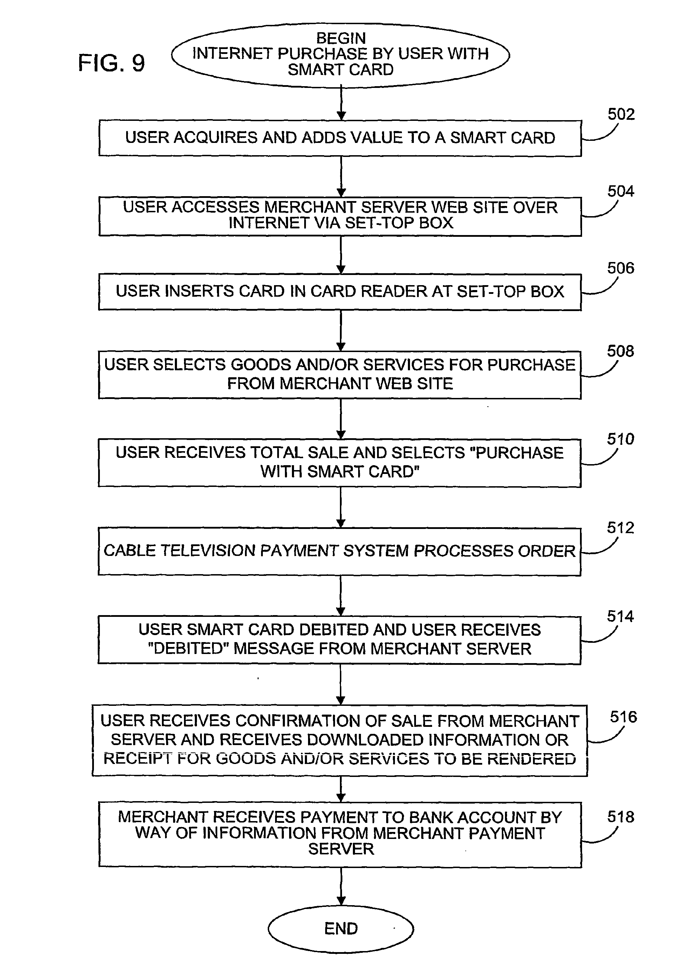

As described above with reference to FIG. 2, according to a first payment embodiment, a user may perform a purchase transaction over the Internet via both a merchant server and merchant payment server. In addition, according to a second payment embodiment, a user may perform a purchase transaction via both cable head end server and cable head end payment server for those goods and/or services made available by a cable provider. FIG. 9 is a flowchart describing a method of performing a purchase transaction via the Internet from a user's perspective such as may occur in accordance with the first embodiment of the invention shown in FIG. 2. In step 502, a user acquires and adds value to a smart card. More particularly, value may be added to a stored value portion of a smart card. Alternatively, a user may acquire a smart card that already contains value. This smart card may take the form of any smart card that is able to store value and to debit value from the card. In step 504 the user accesses the merchant server web site via communication link 234 over the Internet via the set-top box and cable head end server. For instance, a user may communicate with the set-top box using a remote control. This access of a web site may be performed in any suitable fashion such as by using any commercially available web browser. In step 506 the user inserts a smart card in card reader 210 at the user's terminal. Alternatively, the user may insert the card before accessing the web site, or even after the selection of goods and/or services from the merchant web site. In step 508 the user browses the merchant web site and selects goods and/or services for purchase from the merchant using the web site interface that the merchant has provided. The user then selects an appropriate button on the merchant web site to indicate what the user wishes to purchase. Next, in step 510 the user receives a total sale amount from the merchant server and is directed to actuate a button on the web site indicating that the user wishes to proceed with the purchase using the smart card.

In step 512 the architecture and system of the present invention (such as is shown in FIG. 2, for example) processes the user order by way of the merchant payment server (via the cable head end server), terminal and security card. In step 514, the user's smart card is debited by the total sale amount and the user receives a "debited" message at the user's terminal. This message is optional if the system is designed so as to not inform the user of this debit. In step 516 the user receives a confirmation message from the merchant server indicating that the transaction has been completed. The user may now download the purchased information and/or receive a receipt for goods and/or services to be rendered or delivered from the merchant at a later date. In step 518 the merchant, via a clearing and administration system, receives payment to its bank account for the goods and/or services rendered by way of information collected from the merchant payment server. In one embodiment of the invention, an existing clearing and administration system is used, as well as an existing methodology for transferring information from a security card for later reconciliation. This use of an existing "back end" allows systems of the invention to be implemented quickly and cheaply. This approach also ensures that cards used in the system are compatible with other smart card terminals.

One embodiment of a technique by which a financial transaction may be completed over the Internet will now be described using the flowchart of FIGS. 10A through 10D with reference to FIG. 4.

It should be appreciated that a wide variety of terminology may be used to describe message flow throughout the architecture. For example, the terminology used herein to describe the sequential messages draw request, debit, success, and confirmation, may also be referred to by the respective terminology: draw request, debit IEP, debit response, and debit result (or message result).

Initially, a suitable web browser of cable head end server 204 is used by the user to access a merchant server web site as indicated by 302. In step 602, the user selects goods and/or services from the merchant site and indicates to the site that the user wishes to purchase these items using a smart card as indicated at 304. In step 604 the merchant server receives this request for a smart card transaction. More particularly, the merchant server receives this request through the cable head end server.

In step 606 the merchant server builds an HTML page that includes the following cable head end applet parameters: the total cost of the transaction as determined by the merchant server; the type of currency being used; the port and IP address of the payment server; a unique transaction identifier used by both the payment server and the merchant server to track a transaction; and a unique merchant identifier assigned to the merchant by the acquirer and known to the payment server. Other information may also be included such as the currency's exponent, a status URL address of the merchant server used for communication from the cable head end server, and a merchant server generated key and other security information to ensure the identity of the merchant server and the integrity of the message. Other process related information such as software release level, encryption methodology and keys may also be conveyed. Once this page has been built, the page is sent 306 to the requesting cable head end browser and triggers the loading of the cable head end code module (in this example a Java applet) in the cable head end server.

Some browsers may not allow an applet to invoke a dynamic link library (DLL) due to security reasons. In an embodiment of the present invention, the cable head end applet along with any DLLs needed are preloaded on the cable head end server. Then, the merchant server is allowed to invoke the cable head end applet and DLLs dynamically to circumvent this security precaution.

The cable head end server then sends the page to the set-top box in step 607. More particularly, the page may be sent using a protocol proprietary to the cable provider.

In step 608 the set-top box interacts with smart card 5 in card reader 210 to obtain card information 308 and sends the retrieved information to cable head end server 204. In step 609 cable head end server 204 builds draw request message for later transmission 310 to merchant payment server 206. In one embodiment of the invention, the cable head end applet loads a local DLL, makes an API call to that library, which in turn makes a call to another DLL that finally makes a call to the card reader. In this fashion communication with the card is achieved. Once responses from the card are received, the cable head end module will also combine these responses into a byte stream suitable for transmission over a network to a payment server. Also at this point, the currency type and expiration date on the card are checked, and the total cost of the ordered merchandise is checked against the card balance to ensure that the value on the card is great enough to cover the transaction. If the checks are not successful, a message to that effect is delivered to the user and this transaction terminates.

The cable head end module emulates a variety of security card commands to receive responses from these commands from the smart card. Because the smart card and the security card are now physically separated from one another, and communication takes place over the Internet, it would not be advantageous to engage in numerous commands and responses over such an open network. In the interest of speed and reliability, it is advantageous to have fewer messages exchanged.

To operate securely and reliably in this environment, in one embodiment of the present invention, cable head end module 224 emulates a security card and gathers all the responses for transmission in one draw request message. The draw request message may include a variety of information including a draw request token, state information, the merchant identifier, the transaction identifier, security information, a purse provider identifier, an intersector electronic purse (IEP) identifier, an algorithm used by the card, an expiry date, the balance of the card, a currency code, a currency exponent, the authentication mode of the IEP, the transaction number of the IEP, a key version and the purchase amount. As all of this information is prepackaged into a single draw request message, the number of messages between the smart card and the security card over the Internet is greatly reduced.

In this embodiment, the draw request message is built by packaging the smart card's response to the "reset" and "initialize" commands and any public key certificates along with the total cost and the currency of the transaction received from the HTML page. For public key cards, the card and issuer certificates are obtained from read commands and may also be included in the draw request. By packaging all of this information together into one draw request message, it is possible to cut down on the number of messages exchanged between the cable head end server and the merchant payment server, and reliability and speed is improved. In one embodiment of the invention, an intersector electronic purse (IEP) protocol is used to reset and initialize the card and to receive a response.

Next, in step 610 the cable head end server accesses the merchant payment server using the IP address received from the merchant server. In step 612 the cable head end server sends the draw request message to the merchant payment server as indicated at 310. The cable head end server also creates a log of this message being sent.

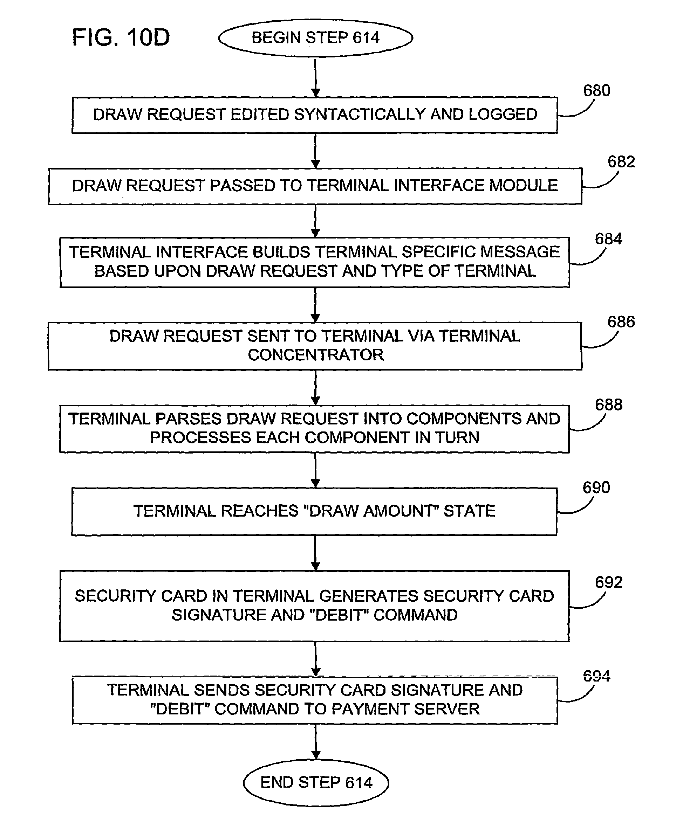

In step 614 the merchant payment server processes the draw request in conjunction with an associated security card as will be explained in greater detail below with reference to FIG. 10D. Draw request 312 is shown being sent to terminal 214. In one embodiment of the invention, the merchant payment server creates a transaction thread for each connected cable head end module to service it through the life cycle of the transaction. After step 614, the merchant payment server has received a debit command and a security card signature 314 from the security card in the terminal. This debit command may also be termed a "debit IEP" command. The security card signature is a value that uniquely identifies and validates security card 218 to prove to smart card 5 that the incoming debit command is a valid command from a real security card. This validation ensures that when the smart card is debited, that the financial totals in the security card are updated. Thus, the user of the smart card is guaranteed that a valid debit of the card has occurred. In a preferred embodiment of the invention, the security card signature is an encrypted value ensuring that no other entity can forge an identity of a security card.

In step 616 the payment server sends the debit command along with the security card signature to the cable head end server as indicated at 316 for the smart card to debit itself. At this time, the merchant payment server also logs this debit command into its database. The debit command is then sent to the set-top box in step 617.

In step 618, upon receiving the debit command from the merchant payment server (via the cable head end server), the set-top box replaces the amount in the debit command with the original amount (from the merchant server) to ensure that the amount has not been tampered with while traveling over the network. At this time, the set-top code module also creates a log of the debit command. Set-top code module 209 then passes the debit command and security card signature to smart card 5 which verifies the signature, debits itself by the purchase amount, and also generates a success message (also termed a "debit response" message) and a smart card signature. The smart card signature is a unique value identifying a valid smart card. In a preferred embodiment of the invention, this signature is in encrypted form to prevent tampering. If card 5 does not have enough value to satisfy the purchase amount, then the "debit response" message indicates as such.

In step 620, card 5 sends a success message 320 along with the card signature back to set-top box code module 209 in set-top box 207. This success message may also be termed a "debit response" message. At this point, the purchase amount has been deducted from the balance on smart card 5. In step 621, the success message and card signature are sent to head end server 204 from set-top-box 207. Next, in step 622, cable head end module 224 packages the success message along with the card signature and sends them back to merchant payment server 206 as indicated at 322. Cable head end module 224 also logs the result of this smart card debit.

In step 624 the merchant payment server receives incoming message 322 and creates a log and updates the transaction status in its database for future error recovery. The merchant payment server then directs this received message to the security card in the terminal as indicated at 324. Next, in step 626 the security card processes this response from the cable head end's terminal and verifies the received smart card signature.

As the security card contains the keys and algorithms necessary to compute smart card signatures, the security card is able to validate that a received smart card signature is in fact a valid one by comparing this smart card signature with a generated expected value. A successful comparison indicates that a success message 324 received from the smart card is in fact a valid success message and that the smart card has been debited. An error result code or a comparison that is not successful potentially indicates that the smart card has not been debited by the proper amount. This comparison of smart card signatures by the security card ensures that a smart card is in fact debited before the merchant server is directed to release the purchased merchandise. This comparison of the smart card signature to an expected value is performed by the security card for the highest level of security. As will be described in the embodiments of FIG. 5, 7, and 8, this comparison of smart card signatures may also take place in the merchant payment server, in the cable head end server or in the merchant server with a variety of other advantages. Assuming that the transaction is so far valid, in step 628 the security card sends a "confirmation" message back to the merchant payment server as indicated at 326. This confirmation message may also be termed a "message result."

In step 630 the terminal updates its data store with the smart card number, a transaction count, the total sale amount, the response from the security card, and transaction numbers from the smart card and from the security card. The merchant payment server also logs the response received from the terminal including the merchant identifier, etc., as indicated in step 632. Next, in step 634, the merchant payment server creates a confirmation message including the transaction identifiers and sends this message to the cable head end server in encrypted form as indicated at 328. This message 328 may also be termed a "message result."

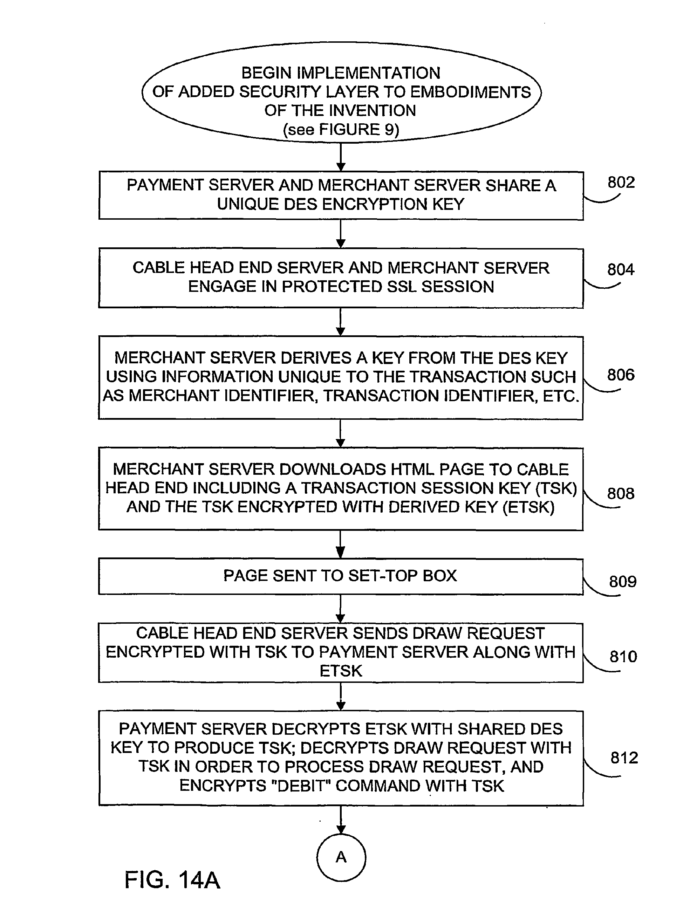

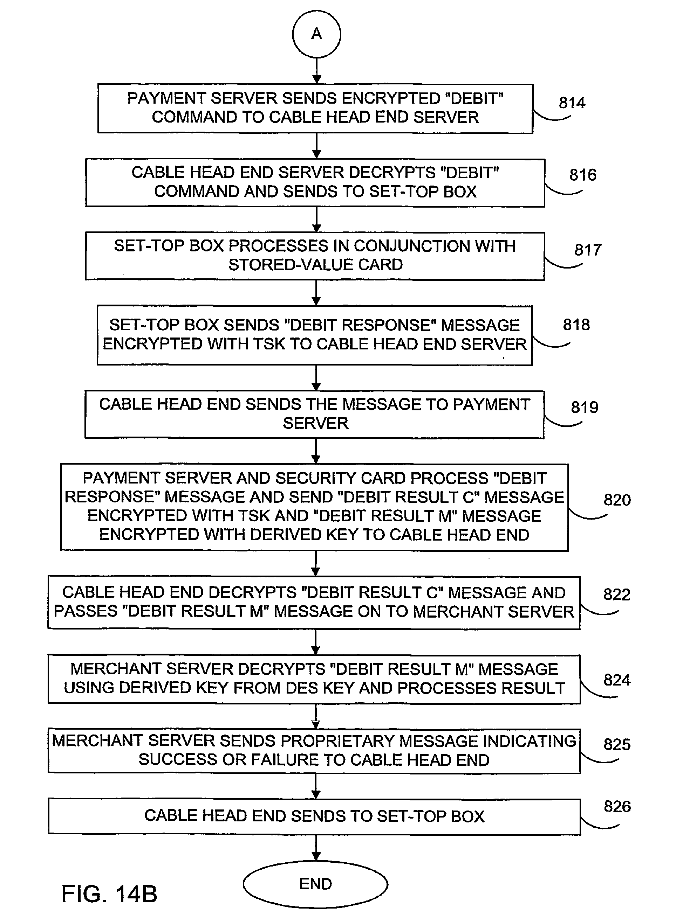

By sending this confirmation message in encrypted form, the confirmation message may be passed to the merchant server by way of the cable head end server without fear of tampering. As the confirmation message is encrypted, it would be extremely difficult for the cable head end server or another entity to forge a confirmation message and trick the merchant server into thinking that a transaction had taken place. In another embodiment of the invention, if the cable head end server is a trusted agent, then the confirmation message need not be encrypted. In yet another embodiment, the payment server may sent two confirmation messages, one not encrypted for the cable head end to process, and one encrypted for the merchant server. FIGS. 14A and 14B present an embodiment in which the payment server sends two messages to the cable head end server.

At this point, the transaction thread of the payment server that was used for the current transaction may release the terminal, thus allowing the terminal to be used by other transactions. This transaction thread then exits at this time.

In step 636 the cable head end server then passes this confirmation message 330 on to the merchant server at the URL address previously received from the merchant server. Message 330 may also be termed a "message result." The cable head end may also post a message to the user informing that the debit has been completed. The cable head end also logs confirmation of the payment. In step 638 the merchant server registers this confirmation message and checks for success. The merchant server calls a validate routine within the merchant code module with the confirmation message in order to validate the response from the cable head end. The validate routine is able to take the transaction identifier along with the encrypted confirmation message to decrypt the confirmation message. If the decrypted confirmation message is acceptable, the merchant server then determines a successful transaction has occurred. Next, in step 640 the merchant server generates an HTML page with the purchase information and delivers this information to the cable head end server. Alternatively, the merchant server may generate a purchase receipt to deliver to the cable head end server indicating goods and/or services to be rendered. At this point, the cable head end server may also log the merchant server's response. The cable head end server then sends the information to the set-top box in step 641. Completion of these steps indicates a successful financial transaction over the Internet using a smart card.

Returning now to a more detailed discussion of step 614, FIG. 10D describes one technique for processing a draw request message in conjunction with a security card. Once this draw request message has been received by the payment server and passed along to the terminal, the terminal parses the message back into individual responses and passes these responses sequentially to the security card as will be explained below. In an alternative embodiment, a dumb terminal is used and the draw request is parsed into its components and otherwise processed by the payment server, which then sends the responses to the security card itself

In step 680 the payment code module of the payment server edits the draw request for syntactic correctness and logs the draw request message as being received. In step 682 the draw request is passed to the terminal interface module of the payment server. In one specific embodiment, the terminal interface then requests a terminal from the payment server's terminal pool. The payment server has a pool of terminals connected to the terminal concentrator that is established at start-up. At start-up, the payment server receives a list of all valid terminal identifiers. The payment server uses these identifiers, and its knowledge of transactions in progress to determine an appropriate terminal to process the transaction. Once a terminal is determined, the terminal interface builds a terminal specific message based upon the draw request and the type of terminal.

In step 686 the terminal specific draw request 312 is sent to the chosen terminal via the concentrator over a local area network. The concentrator acts as a router between a transaction thread in the payment server and its corresponding terminal. The concentrator looks at a header on the draw request to determine to which terminal the transaction should be routed. In one embodiment of the invention, concentrator 212 is removed and merchant payment server 206 communicates directly with terminal 214 (for example).

In step 688 the terminal parses the draw request message into its various components and processes each component in turn to emulate a smart card interacting with the security card in a physical terminal. Prepackaging of a variety of information into the draw request message results in fewer exchanges over the Internet between the cable head end server and the payment server. By now simulating an interaction, the security card behaves as if it were in a physical terminal along with the smart card. A variety of responses from a smart card may be emulated. In this embodiment, the terminal sends each of the three packages "answer to reset", "initialize IEP", and "debit" down to the security card individually and waits for a return message before sending the next response. For a public key transaction, the certificates read by the cable head end are also included as individual responses. In this fashion, even though all of the smart card information (the draw request) originating from the cable head end server has been sent at once in prepackaged form over the Internet, the traditional interaction between the smart card and the security card in a physical terminal may be simulated at the terminal in a remote location.

In step 690 the terminal reaches a "draw amount" state, indicating that the security card is able to generate a debit command. In step 692, the security card generates its security card signature and the debit command. The debit command may also be termed a "debit IEP" command. This signature and debit command 314 are sent to the terminal. The debit command issued by the security card may contain a wide variety of information including the security card identifier, the transaction identifier, the amount to be debited, the currency and currency exponent for the amount, the security card signature, the date, time, and location. The terminal in turn, sends the signature, command, and the terminal identifier to the payment server as indicated in step 694. The information may be sent to the payment server as indicated at 314 via a concentrator. At this point, step 614 ends and control returns to step 616.

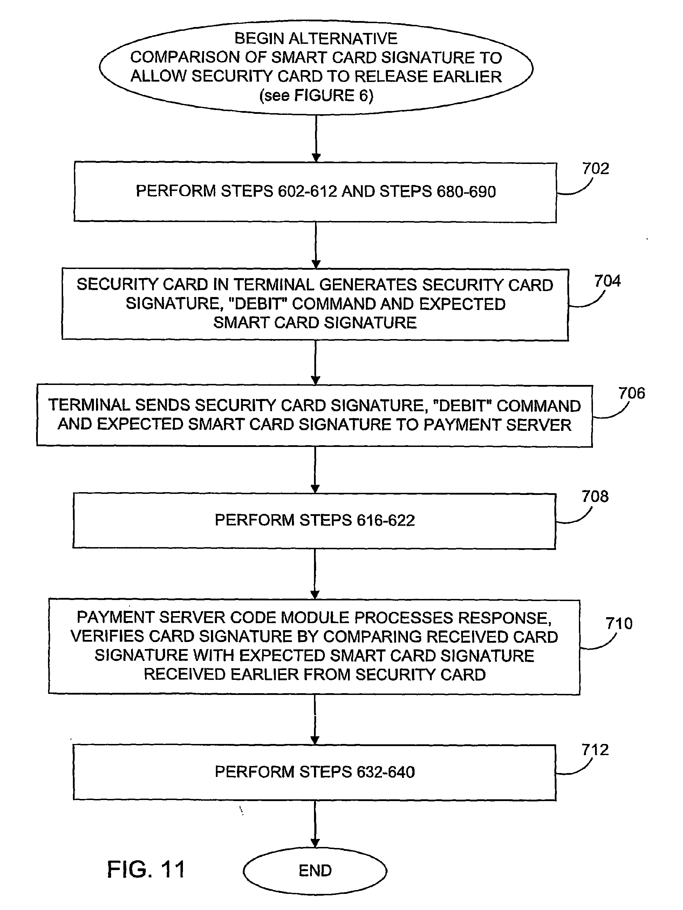

FIG. 11 is a flowchart that describes a technique for implementing this embodiment with reference to FIG. 5. Step 702 indicates that communication between the various entities takes place in a similar fashion as in FIG. 4 up until the terminal reaches the "draw amount" state. At this point, draw request 312 has been received and processed by the security card. Next, in step 704 the security card generates not only the security card signature and the debit command, but also an expected smart card signature. This expected smart card signature is a value expected by the security card from the smart card to validate the smart card's success message. This validation will ensure that the smart card has in fact debited itself.

In step 706 the security card signature, the debit command and the expected smart card signature are sent to the payment code module in the payment server as indicated at 314a. Also, the terminal updates its data store in a similar fashion as in step 630. Next, step 708 indicates that the transaction occurs as before with reference to step 616-622. The steps indicate that the smart card receives the debit command, debits itself, and returns the success message (also termed a "debit response" message) and its card signature to the payment server.

Next, in step 710 the payment server code module processes this response from the smart card by comparing 346 the received card signature with the expected smart card signature received earlier from the security card. This comparison of the two signatures by the payment module of the payment server foregoes the need for another round trip between the payment server and the security card. Because the security card has already delivered the expected card signature to the payment server, the security card may be released as soon as message 314a is received.

Assuming that the comparison is successful, the payment module is then able to generate its own confirmation message instead of waiting for a "confirmation" message from the security card. Next, step 712 indicates that the processing continues in a similar fashion as in steps 632-640. The confirmation message is passed on to the merchant server by way of the cable head end server and the merchant server may then deliver the purchased merchandise to the user.

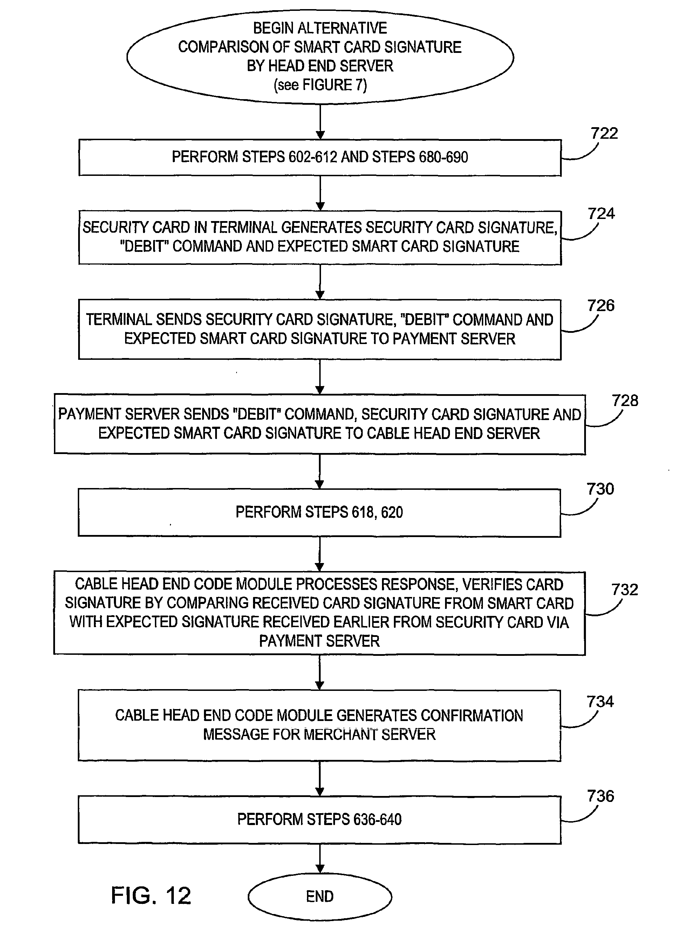

FIG. 12 is a flowchart that describes a technique for implementing this embodiment with reference to FIG. 6. Step 722 indicates that communication between the various entities takes place in a similar fashion as in FIG. 4 up until the terminal reaches the "draw amount" state. At this point, draw request 312 has been received and processed by the security card. Next, in step 724 the security card generates not only the security card signature and the debit command, but also an expected smart card signature.

In step 726 the security card signature, the debit command and this expected smart card signature are sent to the payment code module in the payment server as indicated in 314a. Also, the terminal updates its data store in a similar fashion as in step 630. Next, in step 728 the payment server code module sends the debit command, merchant signature and expected smart card signature to the cable head end server.

Next, step 730 indicates that the transaction occurs as before with reference to steps 618 and 620. The steps indicate that the smart card receives the debit command and debits itself. In step 732, the cable head end code module itself compares the actual card signature from the smart card with the expected signature from the security card. This comparison of the two signatures by the cable head end module of the cable head end server foregoes the need for another round trip between the payment server and the cable head end server. Also, because the security card has already delivered the expected card signature to the payment server, the security card may be released as soon as message 314a is received.

Assuming that the comparison is successful, the cable head end server is then able to generate its own confirmation message in step 734 instead of waiting for a confirmation message from the payment server. Next, step 736 indicates that the processing continues in a similar fashion as in steps 636-640. The confirmation message is passed on to the merchant server and the merchant server may then deliver the purchased merchandise to the user.

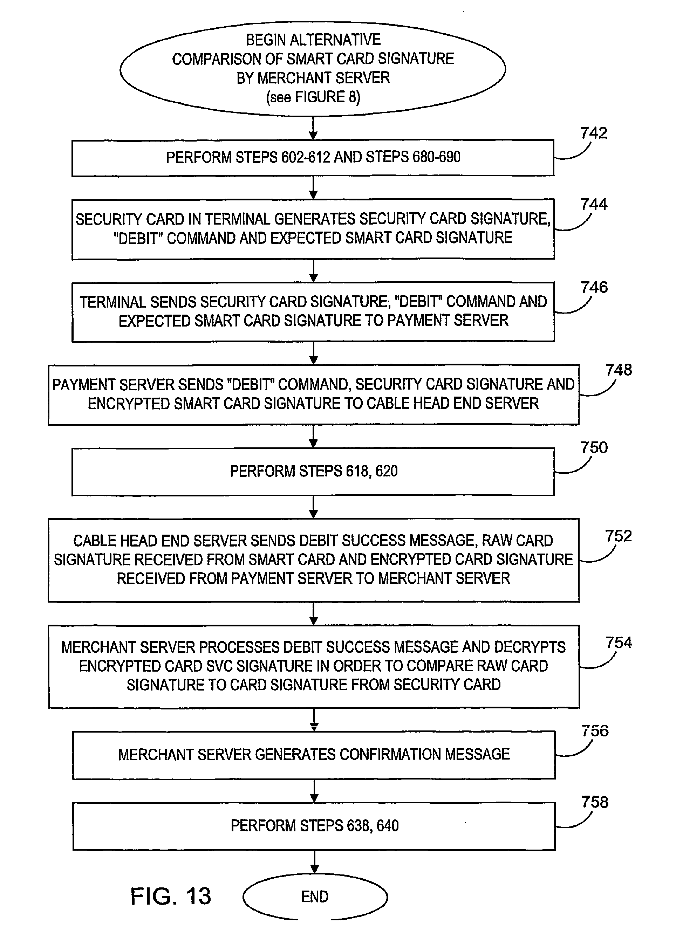

FIG. 13 is a flowchart that describes a technique for implementing this embodiment with reference to FIG. 7. Step 742 indicates that communication between the various entities takes place in a similar fashion as in FIG. 4 up until the terminal reaches the "draw amount" state. At this point, draw request 312 has been received and processed by the security card. Next, in step 744 the security card generates not only the security card signature and the debit command, but also an expected smart card signature.

In step 746 the security card signature, the debit command and this expected smart card signature are sent to the payment code module in the payment server as indicated in 314a. Also, the terminal updates its data store in a similar fashion as in step 630. Next, in step 748 the payment server code module sends the debit command, merchant signature and an encrypted expected smart card signature to the cable head end server. The expected smart card signature is encrypted to prevent tampering by the cable head end server or other outside entity.

Next, step 750 indicates that the transaction occurs as before with reference to steps 618 and 620. The steps indicate that the smart card receives the debit command and debits itself. In step 752, the cable head end code module sends the success message, the raw smart card signature and the encrypted signature on to the merchant server. In step 754 the merchant server processes the success message, decrypts the encrypted signature, and compares the two signatures. This comparison of the two signatures by the merchant server foregoes the need for another round trip between the payment server and the cable head end server. Also, because the security card has already delivered the expected card signature to the payment server, the security card may be released as soon as message 314a is received.

Assuming that the comparison is successful, the merchant server is then able to generate its own confirmation message in step 756 instead of waiting for a confirmation message from the cable head end server. Next, step 758 indicates that the processing continues in a similar fashion as in steps 638 and 640. The merchant server may then deliver the purchased merchandise to the user. In all of the above alternative embodiments, when the transaction is not completed successfully, the payment server reverses the transaction within the terminal.

FIGs. 14A and 14B are a flowchart describing this embodiment of the invention with reference to FIG. 8. In step 802, the payment server and the merchant server share a unique encryption key. Through a prior business arrangement, both of the servers have arranged to share this unique key to add security to the transaction. The shared key may be of any suitable encryption standard and of any length. The key may be a Data Encryption Standard (DES) key having a length of 128 bits including parity. Although this shared key could be used directly, in a preferred embodiment of the invention, there is a derived unique key for each transaction between the merchant server and the payment server. Alternatively, another encryption standard such as RSA may also be used. Preferably, loading of value is performed under DES, while a purchase may be performed under either DES or public key technology.

In step 804 the cable head end server and the merchant server engage in a protected Secure Sockets Layer (SSL) session 404 in which a connection is made, a user browses and makes a purchase selection. The SSL session protects the information transmitted over the Internet such as card information, commands, and encryption keys from being discovered by an unauthorized party. Other techniques for protecting a session may also be used.

In step 806 the merchant server derives a key from the DES key using information unique to the transaction such as the merchant identifier, the transaction identifier, or other information unique to this transaction, such as a random number. Because the payment server shares the DES key with the merchant server and also has access to this unique information about the transaction, the payment server will also be able to derive this same key from the shared DES key. In this step the merchant server also creates a transaction session key (TSK) for use by the cable head end server and payment server in encrypting information.

In step 808 the merchant server downloads an HTML page of information 406 to the cable head end server that includes the TSK and the TSK that is encrypted using the derived key (ETSK). The TSK encrypted with the derived key will be used by the payment server to return an encrypted (and unreadable by the cable head end) confirmation message to the merchant server. Only the merchant server will be able to decrypt this confirmation message and will thus be guaranteed that a successful transaction has occurred and that merchandise may be released to the cable head end. The cable head end then sends the page of information to the set-top box at step 809.

In step 810, the cable head end prepares the draw request in conjunction with the smart card and sends the draw request 408 encrypted with the TSK to the payment server along with the ETSK. In step 812 the payment server uses the shared DES key and the prearranged information unique to the transaction to derive the same key that the merchant server has used. Thus, the derived key can be used to decrypt the ETSK in order to produce the TSK. Once the payment server had produced the TSK, it may decrypt the draw request and process the draw request in any suitable fashion with the security card. Once the payment server has received the debit command from the security card, it encrypts the debit command with the TSK. The debit command may also be termed the "debit IEP command."

In step 814 the payment server sends the encrypted debit command 410 to the cable head end server. In step 816 the cable head end decrypts the debit command with the TSK it had received earlier from the merchant server and sends the debit command to the set-top box. The set-top box then processes the debit command in a suitable fashion with a smart card in step 817. Once the set-top box has received the debit response message from the smart card, it encrypts this message with the TSK and sends the debit response message 412 to the cable head end server in step 818. The cable head end server then sends the debit response message 412 to the payment server in step 819. In step 820, the payment server decrypts the debit response message with the TSK and processes the debit response message in a suitable fashion with the security card.

Once the payment server has received a "debit result" message from the security card, the payment server encrypts the "debit result" message with the TSK to form a "debit result C" message for the cable head end. The "debit result C" message will be used by the cable head end server to inform the user of a successful transaction. The payment server also generates its own confirmation message and encrypts the confirmation message with the derived key to form a "debit result M" message. The payment server then sends 414 the "debit result C" message and the "debit result M" message to the cable head end server.

In step 822 the cable head end server decrypts and processes the "debit result C" message and passes the "debit result M" message 416 on to the merchant server. Because the "debit result M" message is encrypted with the derived key, the cable head end server or other entity is not able to tamper with it. In step 824 the merchant server is able to decrypt the "debit result M" message because it had originally produced the derived key from the DES key. Once the merchant server has determined that a valid "debit result M" message has been received, it confirms that a valid transaction has taken place and may release merchandise to the user. The merchant server then sends a message indicating success or failure of the transaction to the cable head end server in step 825. The cable head end server then sends the message to the set-top box in step 826.

This security embodiment of FIG. 8 may be used with any of the previously described embodiments of the invention. By way of example, this security embodiment may be used with the embodiments of Figures 6 and 7 in which there is only one round trip between the cable head end server and the payment server. In particular, the expected smart card signature received from the security card may be encrypted with the derived key so that it unreadable by the cable head end, yet the merchant server will be able to compare the received smart card signature with the expected card signature to validate the transaction.

A wide variety of terminology may be used to describe the keys described above. For example, the keys referred to above as shared DES key, transaction session key (TSK) and derived key, may also be referred to as shared key, session C key and session M key.

### LOADING DETAILED TRANSACTION FLOW IN ACCORDANCE WITH FIRST LOAD EMBODIMENT

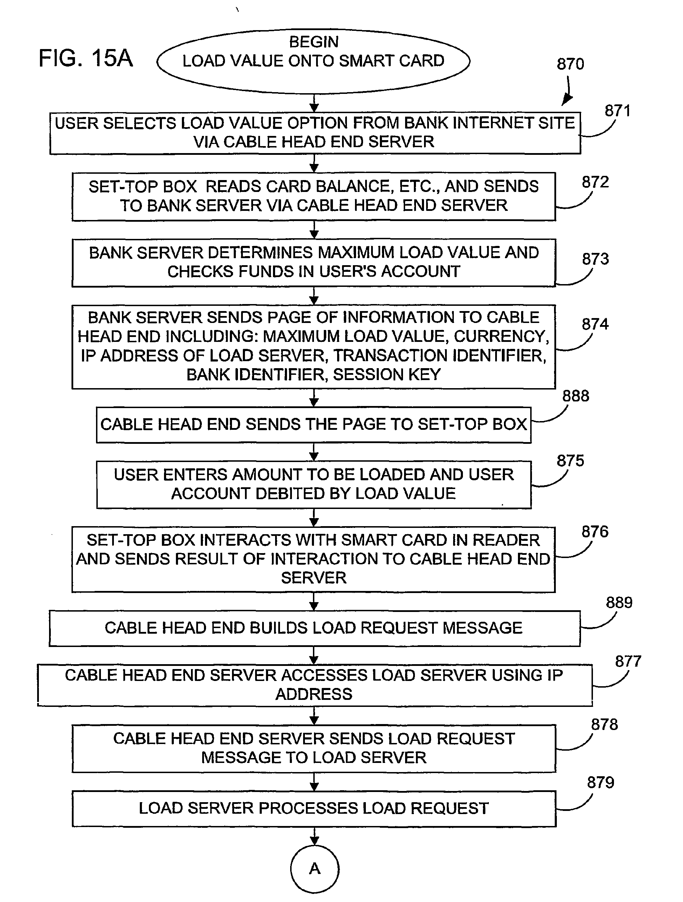

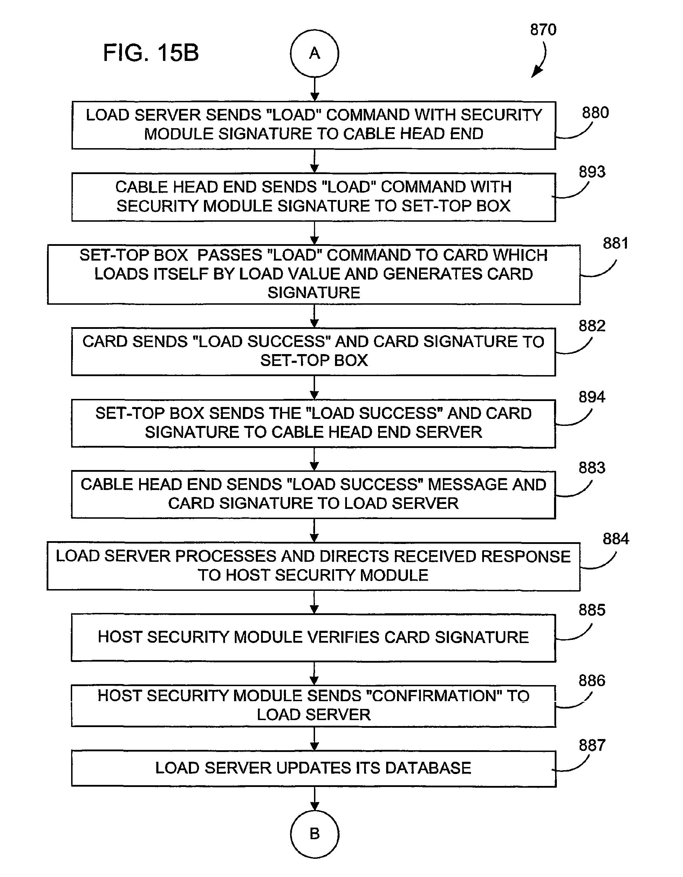

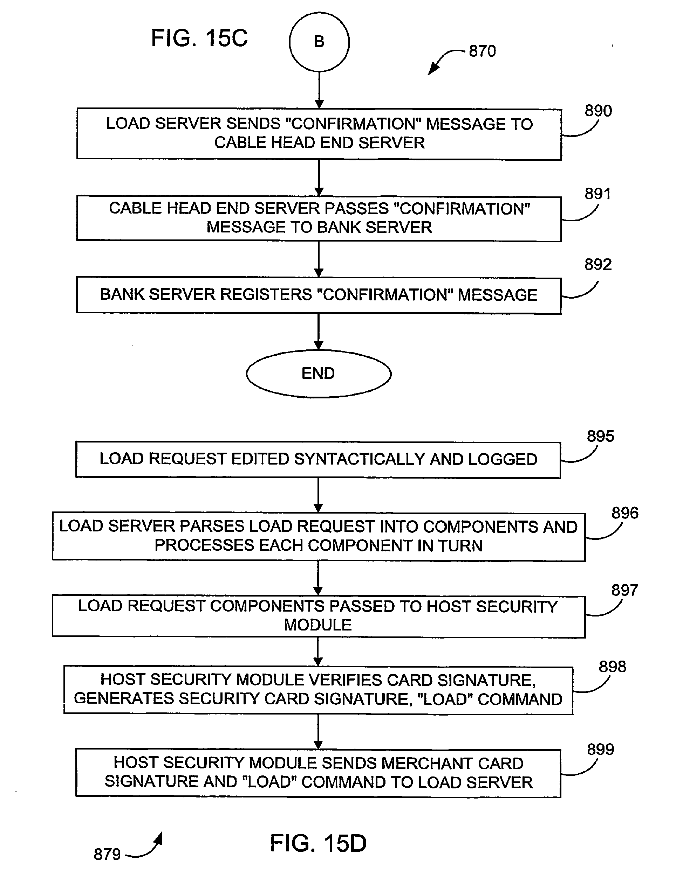

One embodiment of a technique by which a smart card is loaded over the Internet will now be described using the flowchart of FIGS. 15A through 15D with reference to FIG. 3. Various of the steps below may occur in a different order; the following description is for illustration purposes. Interaction between cable head end server 204 and bank server 860, and between cable head end server 204 and load server 862, is preferably implemented in a similar fashion as between cable head end server 204 and merchant server 208, and between cable head end server 204 and merchant payment server 206 as described above, respectively. Certain implementation details mentioned above with respect to payment are equally applicable to loading a smart card. Furthermore, the exemplary flow shown in the figures illustrates a successful transaction (although a negative result is also explained below in the text). For this reason, a "confirmation" message is referred to, which can more broadly be referred to as a "result" message (to reflect both the possibilities of success and failure of a load). Also, a "load success" message is referred to, which can also be referred to as a "confirmation" message, to reflect its status as either confirming a positive load result or a negative load result.

Initially, a suitable web browser of cable head end server 204 is used by the user to access a bank server Internet site. In step 871 the user selects an option to load value onto card 5 (via the cable head end server). In step 872 the bank server sends a request for card information (including current card balance and maximum card balance); set-top box 207 reads the current card balance, currency, and other card information via card reader 210 and returns the balance to bank server 860 via the cable head end server 204. In step 873 the bank server determines the maximum load value and verifies that enough funds are in the user's account to accommodate a load request.

In step 874 the bank server builds an HTML page that includes the following cable head end applet parameters: the maximum load value; the type of currency being used; the port and IP address of the load server; a unique transaction identifier used by both the load server and the bank server to track a transaction; a unique bank identifier assigned to the bank and known to the load server; and a session key. Other information may also be included such as the currency's exponent, a status URL address of the bank server used for communication from the cable head end server, and other security information to ensure the identity of the bank server and the integrity of the message. Other process related information such as software release level, encryption methodology and keys may also be conveyed. Once this page has been built, the page is sent to the requesting cable head end browser and triggers the activation of the cable head end code module (in this example a Java applet) in the cable head end server. The page is then sent to the set-top box in step 888 so that the user may confirm the load value which is to be loaded onto the smart card.

To determine the load value, the bank server requests that the user enter the amount to load to the card. Assuming that the user's account is adequate, the bank server requests the user's account be debited in step 875 by the load value. Advantageously, the debit request from the bank server can use the existing ATM and accounting systems of the bank to debit the user's account. From the bank's point of view, value is being transferred from the user's account much in the same way that value would be transferred to a user in the form of cash at an ATM. In this situation, though, the value is not being dispensed as cash at an ATM, but is being sent over the Internet to a smart card.

In step 876 the set-top box interacts with smart card 5 in the card reader to obtain card information and sends the card information to the head end server. In step 889 the head end server builds a load request message for later transmission to load server 862. Once responses from the card are received, the cable head end server combines these responses into a byte stream suitable for transmission over a network to a load server.

The cable head end server emulates a variety of host security module 864 commands to receive responses from these commands from the smart card. The smart card and the security module are physically separated from one another; communication takes place over the Internet. In the interest of speed and reliability, it is advantageous to have only the traditional authentication, response, and confirmation messages exchanged.

To operate securely and reliably in this environment, in one embodiment of the present invention the cable head end server emulates a security module and gathers all the responses for transmission into one load request message. The load request message may include a variety of information and preferably includes a first card signature (termed S1), a card number, an expiry date, and a load amount. Other information such as the security algorithm, transaction counter, current card balance, and bank server time stamp are also preferably provided.

As all of this information is prepackaged into a single load request message, the number of messages exchanged between the smart card and the security module over the Internet is minimized.

Next, in step 877 the cable head end server accesses the load server using the IP address received from the bank server. In step 878 the cable head end server sends the load request message to the load server. In step 879 the load server processes the load request in conjunction with an associated host security module 864 as will be explained in greater detail below with reference to FIG. 15D. After step 879, the load server has received an issuer security module signature (termed S2) as part of a load command from the security module 864. The security module signature is a value that uniquely identifies and validates the security module to prove to smart card 5 that the incoming load command is a valid command from a real security module. Thus, the user of the smart card, and other interested parties are guaranteed that a valid load of the card has occurred. In a preferred embodiment of the invention, the security module signature is an encrypted value ensuring that no other entity can forge an identity of a security module.

In step 880 the load server sends the load command including with the security module signature to the cable head end server. In step 893 the cable head end server then sends the load command to the set-top box for the smart card to load itself. In step 881, upon receiving the load command from the load server, the set-top box passes the load command to smart card 5 which verifies the signature, loads itself by the load value, and also generates a load success message, a second smart card signature (termed S3), and a result code indicating success or failure of the load. In a preferred embodiment of the invention, this signature is in encrypted form to prevent tampering.

In step 882, card 5 sends load success message containing the card signature (S3) and result code back to the set-top box. The set-top box then sends the success message containing the card signature (S3) and result code to cable head end server in step 894. Next, in step 883 cable head end server 204 packages the load success message along with the card signature and sends them back to load server 862. In step 884 the load server receives the incoming message. The load server then processes the message into its components and directs the components to the security module. Next, in step 885 the security module may process this response from the cable head end's terminal and verify the received smart card signature (S3).

As the security module contains the keys and algorithms necessary to compute smart card signatures, the security module is able to validate that a received smart card signature is in fact a valid one by comparing the received smart card signature with a generated expected value. A successful comparison indicates that a load success message received from the smart card is in fact a valid success message and that the smart card has been loaded. Assuming that the transaction is so far valid, in step 886 the security module sends a "confirmation" message back to the load server.

It is possible that the smart card has not been loaded by the proper amount, that the card is invalid, a user is fraudulent or another discrepancy. For example, it is possible that a user has tampered with the card to make it appear that a load has not occurred, when in fact a load has occurred. In this situation, processing in step 882 and on is slightly different. For example, instead of generating a "load success" message, the card my generate a "negative result" code, potentially indicating that the card has not been loaded. Processing of this situation would then occur as follows.

In step 882, card 5 sends a load message containing the result code and smart card signature S3 back to cable head end server 204. Cable head end server 204 recognizes a negative result code, and invokes negative result handling. Cable head end server 204 interacts with card 5 and generates a new load request for a zero value load using elements from the original request, along with a new card signature S1.

The negative result code, along with the signatures S3 and new S1, and the zero value load request are passed to the load server for analysis. The load server determines if the transaction counter in the zero value load equals the transaction counter in the previous request, along with verifying other pertinent information such as date and time, card number, and currency code and exponent. If the transaction counters are the same, then it is possible that a valid negative result has been received, but it should be verified because the cable head end is not trusted. If the counters are equal, the load server will hold the original S3 and will generate a new load request to the security module using data element values that would have been expected if the original transaction had failed. The new load request along with the new S1 is sent to the security module. The security module then compares the original S1 (from the original load request) to the new S1. If S1 is valid, then the original negative result is true and the security module generates a signature to confirm to the load server that there was no load. The original negative result from the card is then released to the security module to complete the original transaction. Processing would continue, but a user account would not be debited, and no settlement need occur because the card was, in fact, not loaded. If S1 is not valid, the negative response is not true and then the result code in the original request is changed to reflect a successful load and passed to the security module. Processing then continues reflecting that a load has occurred.

On the other hand, if the transaction counters are not the same, then it is still possible that a valid negative result has been received, but it should be verified because the cable head end is not trusted. First, the load server decreases the transaction counter in the new load request to match that of the original. The request along with the new S1 is passed to the security module. The security module calculates its own new S1 based upon the modified new load request. If there is no match, it means that the negative result was in error and that the card had been loaded. Processing continues to reflect a loaded card. If there is a match, it means the negative result was correct and that the transaction counter had been increased by accident. The user account is not debited, and not settlement occurs.

Returning now to further processing, in step 887 the load server logs the response received from the security module and updates its database with the transaction identifier, the bank identifier, the load value, etc. In general, any of the plethora of information passing through the load server may be added to its database. Next, in step 890 the load server creates a confirmation message including the transaction identifier and sends this message to the cable head end server in encrypted form. By sending this confirmation message in encrypted form, the confirmation message may be forwarded to the bank server by way of the cable head end server without fear of tampering. As the confirmation message is encrypted, it would be difficult for the cable head end server or another entity to forge a confirmation message and trick the bank server into thinking that a valid load had taken place.

In step 891 the cable head end server forwards the confirmation message on to the bank server at the URL address previously received from the bank server. The cable head end server may also post a message to the user informing that the load has been completed. The cable head end server may also log confirmation of the load. In step 892 the bank server registers the confirmation message. The bank server calls a routine to decrypt the confirmation message. If the decrypted confirmation message is acceptable, the bank server determines a successful load has occurred. The confirmation message provides assurance to the bank that the user's card was in fact loaded with a particular value and prevents fraud. For example, a fraudulent user who tries to claim that his bank account was decremented and his card not loaded (and should thus receive more money from the bank) would be thwarted because the confirmation message proves that the user's card was in fact loaded. Alternatively, the "confirmation" message may indicate that a load did not occur, in which case the account would not be debited, and no settlement would occur.

At this point a successful load of the user's card has occurred (assuming all is well). For example, if the user had requested $100, that amount has been decremented from the user's account at the bank, and $100 has been loaded onto the user's smart card. Preferably, at this point the amount loaded (in this example $100) is transferred from the bank to the smart card issuer preferably through an existing network. The $100 is transferred so that the card issuer may manage the float on these unspent funds until the user spends the $100. Once the $100 (or a smaller portion) has been spent with a merchant, the card issuer is then able to settle the transaction with the merchant using any suitable clearing and administration system. In alternative embodiment, the bank may retain the $100 and settle directly with the merchant. In another embodiment, the bank and the card issuer are the same financial institution, and the $100 may be shifted between parts of the organization or remain in place.

Returning now to a more detailed discussion of step 879, FIG. 10D describes a technique for processing a load request message in conjunction with a security module. Once the load request message is received by the load server, the load server parses it into the appropriate elements and passes a request to the security module as will be explained below. Alternatively, the load server can build a network message and switch the request to a remote authentication server. Or, a smart terminal could parse the message and pass responses to the security module.

In step 895 the load server edits the load request for syntactic correctness and logs the request as received. In step 896 the load server constructs a load request message. In step 897 the load server passes the load request to the security module to emulate a smart card interacting with the security module. The load server behaves as if a smart card were actually interacting in an ATM (for example) through a network to a host with a security module. In this fashion, the load request originating from the cable head end server has been sent in prepackaged form over the Internet emulating a traditional interaction between the smart card in an ATM.

In step 898, the security module verifies the received smart card signature (S1) to prevent fraud. The security module generates its security module signature (termed S2) and the load command. The signature S2 will confirm to the cable head end server and the smart card that the host security module is authentic and belongs to the issuer of the smart card. Additionally, S2 protects against a user trying to perform a fake load, keys out of synchronization, a counterfeit card, an expired card, etc. The security module then sends the signature and load command to the load server as indicated in step 899. At this point, step 879 ends and control returns to step 880.

### SECOND PAYMENT EMBODIMENT

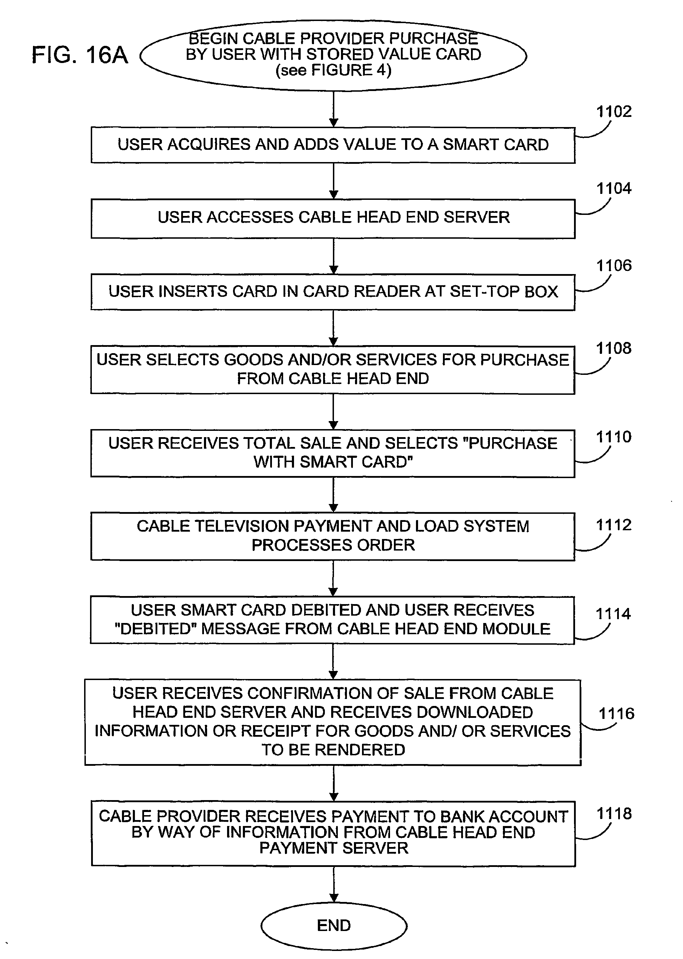

Rather than purchasing goods and/or services from a merchant via the Internet, a user may wish to purchase goods and/or services directly from a cable provider. FIG. 16 is a flowchart describing a method of performing a payment transaction via cable head end server and cable head end payment server from a user's perspective such as may occur with the second alternative of the embodiment of the invention shown in FIG. 2. In step 1102, a user acquires and adds value to a smart card. Alternatively, a user may acquire a smart card that already contains value. This smart card may take the form of any of the above-described smart cards that are able to store value and to debit value from the card. In step 1104 the user accesses the cable head end server which, as described above, operates as a merchant server for the cable provider. In step 1106 the user inserts a smart card in card reader 210 at the set-top box. Alternatively, the user may insert the card before accessing the cable head end server, or even after the selection of goods and/or services from the cable head end server. In step 1108 the user selects goods and/or services for purchase from the cable provider using the interface that is provided by the cable head end server. As one example, the user may purchase goods and/or services from a shopping channel made available by the cable provider. As another example, the user may wish to view a pay-per-view movie and indicate this selection using the interface. Next, in step 1110 the user receives a total sale amount from the cable head end server and is directed to actuate a button indicating that the user wishes to proceed with the purchase using the smart card.

In step 1112 the architecture and system of the present invention (such as is shown in FIG. 2, for example) processes the user order by way of the cable head end payment server, terminal and security card. In step 1114, the user's smart card is debited by the total sale amount and the user receives a "debited" message from the cable head end module. This message is optional if the system is designed so as to not inform the user of this debit. In step 1116 the user receives a confirmation message from the cable head end server indicating that the transaction has been completed. The user may now download the purchase information and/or receive a receipt for goods and/or services to be rendered or delivered from the cable head end server, operating in this instance as the merchant server for the cable provider. In step 1118 the cable provider, via a clearing and administration system, receives payment to its bank account for the goods and/or services rendered by way of information collected from the cable head end payment server. In one embodiment of the invention, an existing clearing and administration system is used, as well as an existing methodology for transferring information from a security card for later reconciliation. This use of an existing "back end" allows systems of the invention to be implemented quickly and cheaply. This approach also ensures that cards used in the system are compatible with other smart terminals. A purchase transaction may be processed similarly to the process shown and described with reference to FIGS. 10A-10D above.

### LOADING DETAILED TRANSACTION FLOW IN ACCORDANCE WITH SECOND LOAD EMBODIMENT

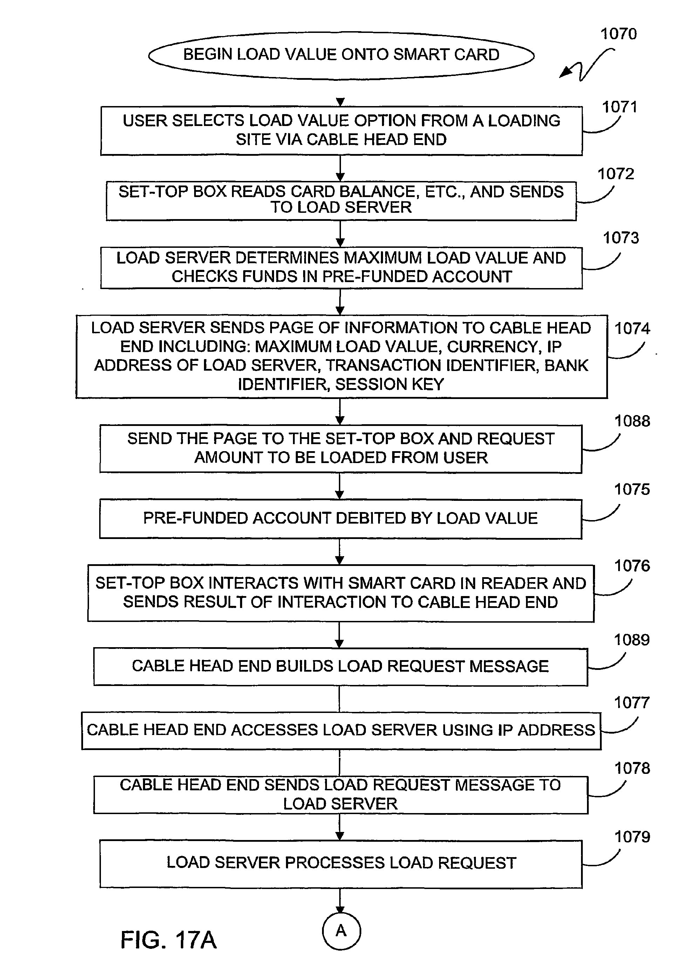

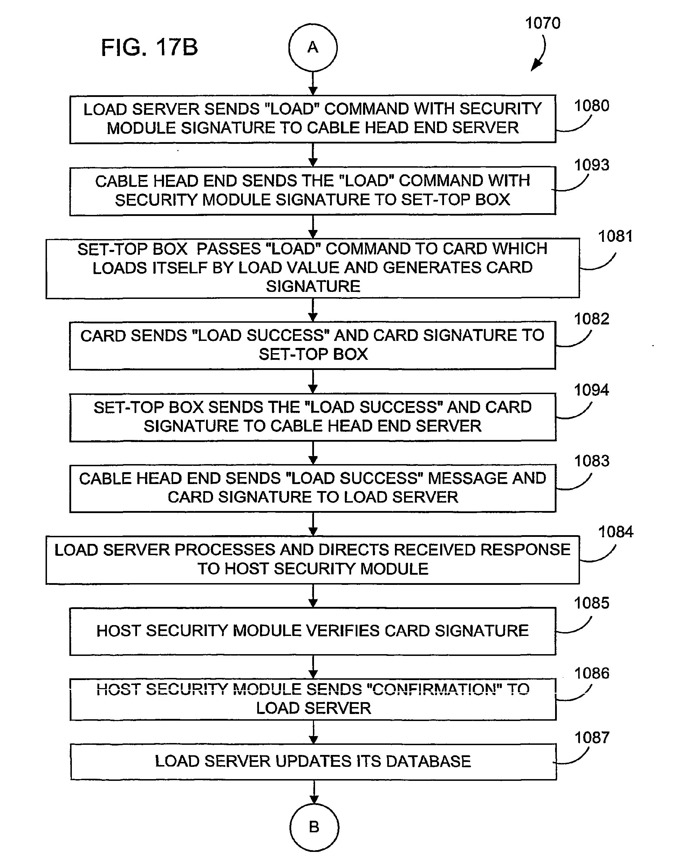

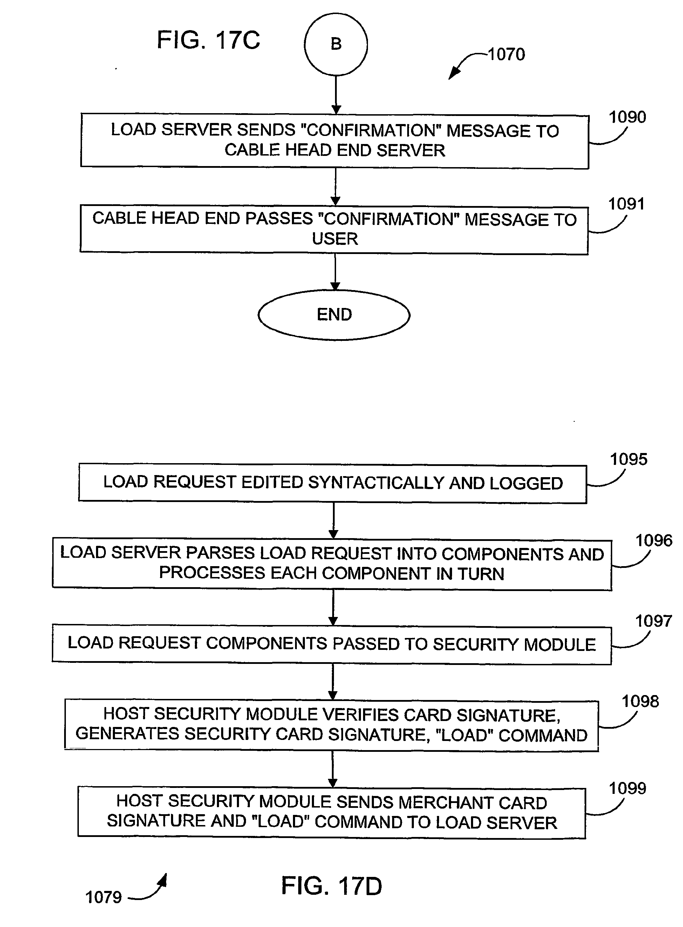

As described above with reference to FIGS. 15A through 15D, a smart card may be loaded from a bank account via a bank server. However, it may be desirable to load value onto a smart card from a pre-funded account that is independent from any bank account. One embodiment of a technique by which a smart card is loaded directly via the load server will now be described using the flowchart of FIGS. 17A through 17D with reference to FIG. 3. Various of the steps below may occur in a different order; the following description is for illustration purposes. Interaction between cable head end server 204 and load server 1062 is preferably implemented in a similar fashion as between cable head end server 204 and merchant server 208, and between cable head end server 204 and merchant payment server 206 as described above, respectively. Certain implementation details mentioned above with respect to payment are equally applicable to loading a smart card. Furthermore, the exemplary flow shown in the figures illustrates a successful transaction (although a negative result is also explained below in the text). For this reason, a "confirmation" message is referred to, which can more broadly be referred to as a "result" message (to reflect both the possibilities of success and failure of a load). Also, a "load success" message is referred to, which can also be referred to as a "confirmation" message, to reflect its status as either confirming a positive load result or a negative load result.

Initially, a suitable web browser of cable head end server 204 is used by the user to access a load server Internet site or, alternatively, a load server may be accessed directly as indicated at 861 of FIG. 3 via cable head end server 204. In step 1071 the user selects an option to load value onto card 5. In step 1072 the load server sends a request for card information (including current card balance and maximum card balance); set-top box 207 reads the current card balance, currency, and other card information via card reader 210 and returns the balance to load server. In step 1073 the load server determines the maximum load value and verifies that enough funds are in the pre-funded account to accommodate a load request.

Assuming communication with the load server takes place via the Internet, in step 1074 the load server builds an HTML page that includes the following cable head end applet parameters: the maximum load value; the type of currency being used; the port and IP address of the load server; a unique transaction identifier used by both the load server to track a transaction; a unique identifier assigned to the pre-funded account and known to the load server; and a session key. Other information may also be included such as the currency's exponent, a status URL address of the load server used for communication from the cable head end server, and other security information to ensure the identity of the load server and the integrity of the message. Other process related information such as software release level, encryption methodology and keys may also be conveyed. Once this page has been built, the page is sent to the requesting cable head end browser and triggers the activation of the cable head end code module (in this example a Java applet) in the cable head end server. The cable head end server then sends the page to the set-top box in step 1088 in order to request that the user confirm the amount to load to the card. Assuming that the pre-funded account is adequate, the load server requests the pre-funded account be debited in step 1075 by the load value.

In step 1076 the set-top box interacts with smart card 5 to obtain card information and sends the card information to the cable head end server. In step 1089 the cable head end server builds a load request message from the card information for later transmission to load server 1062. Once responses from the card are received, the cable head end server combines these responses into a byte stream suitable for transmission over a network to a load server.

The cable head end server emulates a variety of host security module 1064 commands to receive responses from these commands from the smart card. The smart card and the security module are physically separated from one another; communication may take place over the Internet. In the interest of speed and reliability, it is advantageous to have only the traditional authentication, response, and confirmation messages exchanged.

To operate securely and reliably in this environment, in one embodiment of the present invention the cable head end server emulates a security module and gathers all the responses for transmission into one load request message. The load request message may include a variety of information and preferably includes a first card signature (termed S1), a card number, an expiration date, and a load amount. Other information such as the security algorithm, transaction counter, current card balance, and load server time stamp are also preferably provided.

As all of this information is prepackaged into a single load request message, the number of messages exchanged between the smart card and the security module is minimized.

Next, in step 1077 the cable head end server accesses the load server using the IP address received from the load server. In step 1078 the cable head end server sends the load request message to the load server. In step 1079 the load server processes the load request in conjunction with an associated host security module 1064 as will be explained in greater detail below with reference to FIG. 15D. After step 1079, the load server has received an issuer security module signature (termed S2) as part of a load command from the security module 1064. The security module signature is a value that uniquely identifies and validates the security module to prove to smart card 5 that the incoming load command is a valid command from a real security module. Thus, the user of the smart card, and other interested parties are guaranteed that a valid load of the card has occurred. In a preferred embodiment of the invention, the security module signature is an encrypted value ensuring that no other entity can forge an identity of a security module.

In step 1080 the load server sends the load command with the security module signature to the cable head end server. The cable head end server then sends the load command with the security module signature in step 1093 to the set-top box for the smart card to load itself. In step 1081, upon receiving the load command from the load server, the set-top box passes the load command to smart card 5 which verifies the signature, loads itself by the load value, and also generates a load success message, a second smart card signature (termed S3), and a result code indicating success or failure of the load. In a preferred embodiment of the invention, this signature is in encrypted form to prevent tampering.

In step 1082, card 5 sends load success message containing the card signature (S3) and result code back to the set-top box. The set-top box then sends the load success message containing the card signature (S3) and result code to cable head end server 204 in step 1094. Next, in step 1083 cable head end server 204 packages the load success message along with the card signature and sends them back to load server 1062. In step 1084 the load server receives the incoming message. The load server then processes the message into its components and directs the components to the security module. Next, in step 1085 the security module may process this response from the cable head end's terminal and verify the received smart card signature (S3).

As the security module contains the keys and algorithms necessary to compute smart card signatures, the security module is able to validate that a received smart card signature is in fact a valid one by comparing the received smart card signature with a generated expected value. A successful comparison indicates that a load success message received from the smart card is in fact a valid success message and that the smart card has been loaded. Assuming that the transaction is so far valid, in step 1086 the security module sends a "confirmation" message back to the load server.

It is possible that the smart card has not been loaded by the proper amount, that the card is invalid, a user is fraudulent or another discrepancy. For example, it is possible that a user has tampered with the card to make it appear that a load has not occurred, when in fact a load has occurred. In this situation, processing in step 1082 and on is slightly different. For example, instead of generating a "load success" message, the card my generate a "negative result" code, potentially indicating that the card has not been loaded. Processing of this situation would then occur as follows.

In step 1082, card 5 sends a load message containing the result code and smart card signature S3 back to cable head end server 204. Cable head end server 204 recognizes a negative result code, and invokes negative result handling. Cable head end server 204 interacts with card 5 and generates a new load request for a zero value load using elements from the original request, along with a new card signature S 1.

The negative result code, along with the signatures S3 and new S1, and the zero value load request are passed to the load server for analysis. The load server determines if the transaction counter in the zero value load equals the transaction counter in the previous request, along with verifying other pertinent information such as date and time, card number, and currency code and exponent. If the transaction counters are the same, then it is possible that a valid negative result has been received, but it should be verified because the cable head end is not trusted. If the counters are equal, the load server will hold the original S3 and will generate a new load request to the security module using data element values that would have been expected if the original transaction had failed. The new load request along with the new S1 is sent to the security module. The security module then compares the original S1 (from the original load request) to the new S1. If S1 is valid, then the original negative result is true and the security module generates a signature to confirm to the load server that there was no load. The original negative result from the card is then released to the security module to complete the original transaction. Processing would continue, but a user account would not be debited, and no settlement need occur because the card was, in fact, not loaded. If S1 is not valid, the negative response is not true and then the result code in the original request is changed to reflect a successful load and passed to the security module. Processing then continues reflecting that a load has occurred.

On the other hand, if the transaction counters are not the same, then it is still possible that a valid negative result has been received, but it should be verified because the cable head end is not trusted. First, the load server decreases the transaction counter in the new load request to match that of the original. The request along with the new S1 is passed to the security module. The security module calculates its own new S 1 based upon the modified new load request. If there is no match, it means that the negative result was in error and that the card had been loaded. Processing continues to reflect a loaded card. If there is a match, it means the negative result was correct and that the transaction counter had been increased by accident. The user account is not debited, and not settlement occurs.

Returning now to further processing, in step 1087 the load server logs the response received from the security module and updates its database with the transaction identifier, the account identifier, the load value, etc. In general, any of the plethora of information passing through the load server may be added to its database. Next, in step 1090 the load server creates a confirmation message including the transaction identifier and sends this message to the cable head end server in encrypted form. By sending this confirmation message in encrypted form, the confirmation message may be forwarded without fear of tampering. As the confirmation message is encrypted, it would be difficult for the cable head end server or another entity to forge a confirmation message and trick the load server into thinking that a valid load had taken place.

In step 1091 the cable head end server may forward the confirmation message on to the user via the set-top box. In this manner, the cable head end server may post a message to the user informing that the load has been completed. In addition, the cable head end server may forward the confirmation message on to another server at a URL address previously received from the load server. The cable head end server may also log confirmation of the load. Once the additional server receives the confirmation message, it may call a routine to decrypt the confirmation message. If the decrypted confirmation message is acceptable, the additional server determines a successful load has occurred. The confirmation message provides assurance that the user's card was in fact loaded with a particular value and prevents fraud. For example, a fraudulent user who tries to claim that his account was decremented and his card not loaded (and should thus receive more money from the pre-funded account) would be thwarted because the confirmation message proves that the user's card was in fact loaded. Alternatively, the "confirmation" message may indicate that a load did not occur, in which case the account would not be debited, and no settlement would occur.

Returning now to a more detailed discussion of step 1079, FIG. 10D describes a technique for processing a load request message in conjunction with a security module. Once the load request message is received by the load server, the load server parses it into the appropriate elements and passes a request to the security module as will be explained below. Alternatively, the load server can build a network message and switch the request to a remote authentication server. Or, a smart terminal could parse the message and pass responses to the security module.

In step 1095 the load server edits the load request for syntactic correctness and logs the request as received. In step 1096 the load server constructs a load request message. In step 1097 the load server passes the load request to the security module to emulate a smart card interacting with the security module. The load server behaves as if a smart card were actually interacting in an ATM (for example) through a network to a host with a security module. In this fashion, the load request originating from the cable head end server has been sent in prepackaged form (e.g., over the Internet) emulating a traditional interaction between the smart card in an ATM.

In step 1098, the security module verifies the received smart card signature (S1) to prevent fraud. The security module generates its security module signature (termed S2) and the load command. The signature S2 will confirm to the cable head end server and the smart card that the host security module is authentic and belongs to the issuer of the smart card. Additionally, S2 protects against a user trying to perform a fake load, keys out of synchronization, a counterfeit card, an expired card, etc. The security module then sends the signature and load command to the load server as indicated in step 1099. At this point, step 1079 ends and control returns to step 1080.

### COMPUTER SYSTEM EMBODIMENT

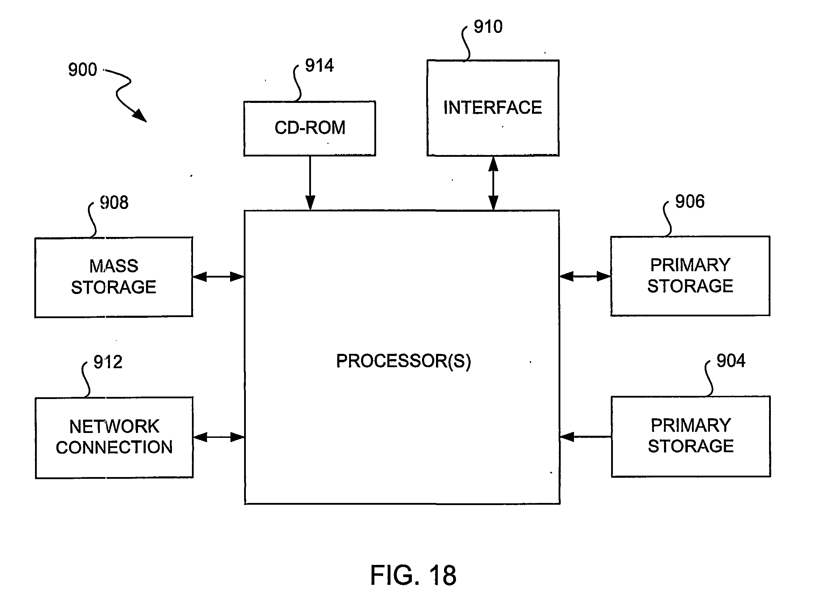

FIG. 18 illustrates a computer system 900 suitable for implementing an embodiment of the present invention. Computer system 900 includes any number of processors 902 (also referred to as central processing units, or CPUs) that are coupled to storage devices including primary storage 906 (such as random access memory, or RAM) and primary storage 904 (such as a read only memory, or ROM). As is well known in the art, primary storage 904 acts to transfer data and instructions uni-directionally to the CPU and primary storage 906 is used typically to transfer data and instructions in a bi-directional manner. Both of these primary storage devices may include any suitable of the computer-readable media described below. A mass storage device 908 is also coupled bi-directionally to CPU 902 and provides additional data storage capacity and may also include any of the computer-readable media described below. Mass storage device 908 may be used to store programs, data and the like and is typically a secondary storage medium (such as a hard disk) that is slower than primary storage. It will be appreciated that the information retained within mass storage device 908, may, in appropriate cases, be incorporated in standard fashion as part of primary storage 906 as virtual memory. A specific mass storage device such as a CD-ROM 914 passes data uni-directionally to the CPU.

CPU 902 is also coupled to an interface 910 that includes one or more input/output devices such as such as video monitors, track balls, mice, keyboards, microphones, touch-sensitive displays, transducer card readers, magnetic or paper tape readers, tablets, styluses, voice or handwriting recognizers, biometrics readers, or other computers. CPU 902 optionally may be coupled to another computer or telecommunications network using a network connection as shown generally at 912. With such a network connection, it is contemplated that the CPU might receive information from the network, or might output information to the network in the course of performing the above-described method steps. Furthermore, method embodiments of the present invention may execute solely upon CPU 902 or may execute over a network connection such as the Internet in conjunction with a remote CPU that shares a portion of the processing.

In addition, embodiments of the present invention further relate to computer storage products with a computer readable medium that have program code thereon for performing various computer-implemented operations. The media and program code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as application-specific integrated circuits (ASICs), programmable logic devices (PLDs) and ROM and RAM devices. Examples of program code include machine code, such as produced by a compiler, and files containing higher level code that are executed by a computer using an interpreter.

Although the foregoing invention has been described in some detail for purposes of clarity of understanding, it will be apparent that certain changes and modifications may be practiced within the scope of the appended claims. For instance, any suitable smart card capable of loading, storing and decrementing value on command may be used with the present invention. Also, any network capable of performing routing functionality between a cable head end server and a load and bank server may be used. Furthermore, the security module may be a physically separate module, a card located in a terminal attached to a load server, or its functionality may be incorporated directly into a load server in hardware or software. And although the cable head end server may be used to route messages between the bank server and load server, both of these servers may also communicate directly between themselves, and may even be the same computer. The specific messages shown passing between the computers are exemplary, and other types of messages may be used. A specified load request is shown, but other information may also be loaded onto a smart card using a security module emulation and then sent packaged as one message to the security module over a network. In addition to monetary value, other types of value such as electronic cash, checks, awards, loyalty points, benefits, etc., may be loaded onto a card, and the term "value" is intended to broadly cover all these various types. Any suitable type of encryption may be used to encrypt messages passing between the computers. Therefore, the described embodiments should be taken as illustrative and not restrictive, and the invention should not be limited to the details given herein but should be defined by the following claims and their full scope of equivalents.

## Claims

1. A loading system for loading an indication of value over a network (202) onto a smart card (5), said loading system comprising:
a bank server (860) in communication with said network (202), said bank server (860) arranged to debit a user account by an indicated value;
a cable head end server (204) in communication with said network (202);
a set-top box (207) in communication with said cable head end server (204), said set-top box (207) including a card reader (210) for communicating with a smart card (5) and an input device for indicating a value to be debited from said user account, said smart card being arranged to load the indication of value only upon verifying a cryptographic signature; and
a load server (862) distinct from said bank server (860) and in communication with said network (202), said load server (862) including an interface for communicating with a security module (864) that secures said loading of an indication of value onto said smart card (5), said security module (864) being arranged to receive a load request including a smart card signature and to generate a load command destined for said smart card (5) that includes said cryptographic signature, said security module (864) being further arranged to transmit a confirmation message to said bank server (860) over said network (202), thereby assuring that said smart card (5) has been loaded by said indicated value,
wherein said network (202) is the Internet, said bank server (860) includes a bank web site for accepting a load request, and said cable head end server (204) and said bank server (860) are at separate locations and communicate over the Internet,
and wherein said cable head end server (204) further includes a command emulator for emulating security module commands that are sent to said smart card (5) and for grouping responses to said security module commands into a load request message to be sent to said load server (862), and wherein said load server (862) includes a response emulator for emulating responses from said smart card (5) that are sent to said security module (864).

2. A loading system as recited in claim 1, further comprising:
a clearing and administration system for reconciling said debit of said user account with a purchase using said smart card (5).

3. A loading system as recited in claim 1 or claim 2, wherein said card reader (210) obtains a message from said smart card (5) and communicates said message to said cable head end server (204), and said cable head end server (204) sends said message to said load server (862).

4. A loading system as recited in claim 3, wherein said cable head end server (204) performs encryption of said message prior to sending said message to said load server (862).

5. A loading system as recited in claim 3 or claim 4, wherein said cable head end server (204) formats said message prior to sending said message to said load server (862).

6. A loading system as recited in any of claims 3 to 5, wherein said cable head end server (204) provides user interface functionality associated with said set-top box (207).

7. A loading system as recited in any preceding claim, wherein said security module (864) includes a comparator for comparing a smart card signature received from said smart card (5) with an expected signature to confirm a transaction.

8. A computer-implemented method of loading a smart card (5) over a network (202), comprising:
transmitting over a network (202) from a cable head end server (204) to a bank server (860) a request to load a smart card (5) with an indication of value, said smart card (5) being in communication with a set-top box (207);
receiving from said bank server (860) a verified indication of load value;
sending a load request to a load server (862) connected to said network (202), said load server being distinct from said bank server;
receiving a load command from said load server (862) at said cable head end server (204), said load command being generated under the control of a security module (864) and including a cryptographic signature;
verifying said cryptographic signature by said smart card (5);
sending said load command to said set-top box (207);
loading said smart card (5) by said indication of load value; and
sending confirmation information to said bank server (860), whereby said bank server (860) is assured that said loading is a success,
wherein said network (202) is the Internet over which said recited steps of said method occur, wherein said bank server (860) includes a bank web site for accepting a load request, and wherein said cable head end server (204) and said bank server (860) are at separate locations,
the method further comprising:
emulating security module commands that are sent to said smart card (5) associated with said cable head end server (204); and
grouping responses to said security module commands into said load request so that said responses may be sent as a group to said load server (862) to reduce network traffic between said load server (862) and said cable head end server (204).

9. A method as recited in claim 8, further comprising:
sending a result of interaction between said smart card (5) and a card reader (210) associated with said set-top box (207) to said cable head end server (204); and
building said load request at said cable head end server (204).

10. A method as recited in claims 8 or 9, wherein said confirmation information includes an encrypted confirmation message unreadable by said cable head end server (204), said method further comprising:
receiving said encrypted confirmation message from said load server (862).

## Patentansprüche

1. Ladesystem zum Laden einer Wertangabe über ein Netzwerk (202) auf eine Chipkarte (5), wobei das Ladesystem umfasst:
einen Bankserver (860), der mit dem Netzwerk (202) kommuniziert, wobei der Bankserver (860) so ausgelegt ist, dass er von einem Benutzerkonto einen angegebenen Wert abbucht;
einen Kabelkopf-Endserver (204), der mit dem Netzwerk (202) kommuniziert;
eine Set-Top-Box (207), die mit dem Kabelkopf-Endserver (204) kommuniziert, wobei die Set-Top-Box (207) einen Kartenleser (210) zum Kommunizieren mit einer Chipkarte (5) und ein Eingabegerät zum Eingeben eines Werts umfasst, der von dem Benutzerkonto abgebucht werden soll, wobei die Chipkarte so ausgelegt ist, dass sie die Wertangabe erst nach Verifizierung einer kryptographischen Signatur lädt; und
einen Ladeserver (862), der sich von dem Bankserver (860) unterscheidet und mit dem Netzwerk (202) kommuniziert, wobei der Ladeserver (862) eine Schnittstelle zum Kommunizieren mit einem Sicherheitsmodul (864) umfasst, das das Laden einer Wertangabe auf die Chipkarte (5) sichert, wobei das Sicherheitsmodul (864) so ausgelegt ist, dass es eine Ladeanforderung umfassend eine Chipkarten-Signatur empfängt, und einen Ladebefehl generiert, der für die Chipkarte (5) bestimmt ist, der die kryptographische Signatur umfasst, wobei das Sicherheitsmodul (864) weiter so ausgelegt ist, dass es eine Bestätigungsnachricht an den Bankserver (860) über das Netzwerk (202) überträgt, wodurch es sicherstellt, dass die Chipkarte (5) mit dem angegebenen Wert geladen worden ist,
wobei das Netzwerk (202) das Internet ist, der Bankserver (860) eine Bankwebsite zum Akzeptieren einer Ladeanforderung umfasst und der Kabelkopf-Endserver (204) und der Bankserver (860) sich an verschiedenen Orten befinden und über das Internet kommunizieren,
und wobei der Kabelkopf-Endserver (204) weiter einen Befehl-Emulator zum Emulieren von Befehlen des Sicherheitsmoduls umfasst, die an die Chipkarte (5) gesendet werden, und zum Gruppieren von Antworten auf die Befehle des Sicherheitsmoduls in eine Ladeanforderungsnachricht, die an den Ladeserver (862) gesendet wird, und wobei der Ladeserver (862) einen Antwort-Emulator zum Emulieren von Antworten von der Chipkarte (5) umfasst, die an das Sicherheitsmodul (864) gesendet werden.

2. Ladesystem nach Anspruch 1, weiter umfassend:
ein Abrechnungs- und Verwaltungssystem zum Abstimmen der Abbuchung vom Benutzerkonto mit einem Kauf unter Verwendung der Chipkarte (5).

3. Ladesystem nach Anspruch 1 oder 2, wobei der Kartenleser (210) eine Nachricht von der Chipkarte (5) erhält und die Nachricht an den Kabelkopf-Endserver (204) kommuniziert und der Kabelkopf-Endserver (204) die Nachricht an den Ladeserver (862) sendet.

4. Ladesystem nach Anspruch 3, wobei der Kabelkopf-Endserver (204) die Verschlüsselung der Nachricht durchführt, bevor er die Nachricht an den Ladeserver (862) sendet.

5. Ladesystem nach Anspruch 3 oder 4, wobei der Kabelkopf-Endserver (204) die Nachricht formatiert, bevor er die Nachricht an den Ladeserver (862) sendet.

6. Ladesystem nach einem der Ansprüche 3 bis 5, wobei der Kabelkopf-Endserver (204) eine Benutzerschnittstellen-Funktionalität bereitstellt, die mit der Set-Top-Box (207) verbunden ist.

7. Ladesystem nach einem der vorhergehenden Ansprüche, wobei das Sicherheitsmodul (864) einen Komparator zum Vergleichen einer Chipkartensignatur, die von der Chipkarte (5) erhalten wird, mit einer erwarteten Signatur aufweist, um eine Transaktion zu bestätigen.

8. Computerimplementiertes Verfahren zum Laden einer Chipkarte (5) über ein Netzwerk (202), umfassend:
Übertragen einer Anforderung zum Laden einer Chipkarte (5) mit einer Wertangabe über ein Netzwerk (202) von einem Kabelkopf-Endserver (204) an einen Bankserver (860), wobei die Chipkarte (5) mit einer Set-Top-Box (207) kommuniziert;
Erhalten einer verifizierten Angabe des Ladewerts vom Bankserver (860);
Senden einer Ladeanforderung an einen Ladeserver (862), der mit dem Netzwerk (202) verbunden ist, wobei sich der Ladeserver von dem Bankserver unterscheidet;
Erhalten eines Ladebefehls vom Ladeserver (862) am Kabelkopf-Endserver (204), wobei der Ladebefehl unter der Steuerung eines Sicherheitsmoduls (864) generiert wird und eine kryptographische Signatur aufweist;
Verifizieren der kryptographischen Signatur durch die Chipkarte (5);
Senden des Ladebefehls an die Set-Top-Box (207);
Laden der Chipkarte (5) mit der Angabe des Ladewerts; und
Senden der Bestätigungsinformation an den Bankserver (860), wodurch dem Bankserver (860) zugesichert wird, dass das Laden erfolgreich ist,
wobei das Netzwerk (202) das Internet ist, über das die erwähnten Schritte des Verfahrens erfolgen, wobei der Bankserver (860) eine Bankwebsite zum Akzeptieren einer Ladeanforderung umfasst und wobei der Kabelkopf-Endserver (204) und der Bankserver (860) sich an separaten Orten befinden,
wobei das Verfahren weiter umfasst:
Emulieren von Befehlen des Sicherheitsmoduls, die an die Chipkarte (5) gesendet werden, die mit dem Kabelkopf-Endserver (204) verbunden ist; und
Gruppieren von Antworten auf die Befehle des Sicherheitsmoduls in die Ladeanforderung, sodass die Antworten als Gruppe an den Ladeserver (862) gesendet werden können, um den Netzwerkverkehr zwischen dem Ladeserver (862) und dem Kabelkopf-Endserver (204) zu reduzieren.

9. Verfahren nach Anspruch 8, weiter umfassend:
Senden eines Ergebnisses der Interaktion zwischen der Chipkarte (5) und einem Kartenleser (210), der mit der Set-Top-Box (207) verbunden ist, an den Kabelkopf-Endserver (204); und
Aufbauen der Ladeanforderung am Kabelkopf-Endserver (204).

10. Verfahren nach Anspruch 8 oder 9, wobei die Bestätigungsinformation eine verschlüsselte Bestätigungsnachricht umfasst, die unlesbar für den Kabelkopf-Endserver (204) ist, und das Verfahren weiter umfasst:
Erhalten der verschlüsselten Bestätigungsnachricht vom Ladeserver (862).

## Revendications

1. Système de chargement destiné à charger une indication d'une valeur circulant à travers un réseau (202) sur une carte à puce (5), ledit système de chargement comprenant :
un serveur de banque (860) en communication avec ledit réseau (202), ledit serveur de banque (860) étant organisé pour débiter un compte d'utilisateur d'une valeur indiquée ;
un serveur (204) de tête de réseau en communication avec ledit réseau (202) ;
un boîtier décodeur (207) en communication avec ledit serveur (204) de tête de réseau, ledit boîtier décodeur (207) comprenant un lecteur de carte (210) destiné à communiquer avec une carte à puce (5) et un dispositif d'entrée destiné à indiquer une valeur à débiter dudit compte d'utilisateur, ladite carte à puce étant organisée pour charger l'indication d'une valeur uniquement sur vérification d'une signature cryptographique ; et
un serveur de chargement (862) distinct dudit serveur de banque (860) et en communication avec ledit réseau (202), ledit serveur de chargement (862) comprenant une interface destinée à communiquer avec un module de sécurité (864) qui sécurise ledit chargement d'une indication de valeur sur ladite carte à puce (5), ledit module de sécurité (864) étant organisé pour recevoir une demande de chargement comprenant une signature de la carte à puce et pour générer une commande de chargement destinée à ladite carte à puce (5) qui comprend ladite signature cryptographique, ledit module de sécurité (864) étant en outre organisé pour transmettre un message de confirmation vers ledit serveur de banque (860) à travers ledit réseau (202), assurant ainsi que ladite carte à puce (5) a été chargée par ladite valeur indiquée,
dans lequel ledit réseau (202) est l'Internet, ledit serveur de banque (860) comprend un site Internet de banque destiné à accepter une demande de chargement, et ledit serveur (204) de tête de réseau et ledit serveur de banque (860) se situent à des emplacements séparés et communiquent à travers l'Internet,
et dans lequel ledit serveur (204) de tête de réseau comprend en outre un émulateur de commandes destiné à émuler des commandes d'un module de sécurité qui sont envoyées vers ladite carte à puce (5) et à grouper des réponses vers lesdites commandes du module de sécurité en un message de demande de chargement à envoyer vers ledit serveur de chargement (862), et dans lequel ledit serveur de chargement (862) comprend un émulateur de réponses destiné à émuler des réponses venant de ladite carte à puce (5) qui sont envoyées vers ledit module de sécurité (864).

2. Système de chargement tel que décrit dans la revendication 1, comprenant en outre :
un système d'acquittement et d'administration destiné à concilier ledit débit dudit compte d'utilisateur avec un achat utilisant ladite carte à puce (5).

3. Système de chargement tel que décrit dans la revendication 1 ou la revendication 2, dans lequel ledit lecteur de carte (210) obtient un message venant de ladite carte à puce (5) et communique ledit message vers ledit serveur (204) de tête de réseau, et ledit serveur (204) de tête de réseau envoie ledit message vers ledit serveur de chargement (862).

4. Système de chargement tel que décrit dans la revendication 3, dans lequel ledit serveur (204) de tête de réseau effectue un cryptage dudit message avant d'envoyer ledit message vers ledit serveur de chargement (862).

5. Système de chargement tel que décrit dans la revendication 3 ou la revendication 4, dans lequel ledit serveur (204) de tête de réseau formate ledit message avant d'envoyer ledit message vers ledit serveur de chargement (862).

6. Système de chargement tel que décrit dans l'une quelconque des revendications 3 à 5, dans lequel ledit serveur (204) de tête de réseau fournit une fonctionnalité d'interface d'utilisateur associée avec ledit boîtier décodeur (207).

7. Système de chargement tel que décrit dans une quelconque revendication précédente, dans lequel ledit module de sécurité (864) comprend un comparateur destiné à comparer une signature de carte à puce reçue de ladite carte à puce (5) avec une signature attendue pour confirmer une transaction.

8. Procédé exécuté par un ordinateur de chargement d'une carte à puce (5) à travers un réseau (202), comprenant les étapes consistant à :
transmettre à travers un réseau (202) depuis un serveur (204) de tête de réseau vers un serveur de banque (860) une demande destinée à charger une carte à puce (5) avec une indication de la valeur, ladite carte à puce (5) étant en communication avec un boîtier décodeur (207) ;
recevoir depuis ledit serveur de banque (860) une indication vérifiée de la valeur de chargement ;
envoyer une demande de chargement vers un serveur de chargement (862) connecté audit réseau (202), ledit serveur de chargement étant distinct dudit serveur de banque ;
recevoir une commande de chargement venant dudit serveur de chargement (862) audit serveur (204) de tête de réseau, ladite commande de chargement étant générée sous le contrôle d'un module de sécurité (864) et comprenant une signature cryptographique ;
vérifier ladite signature cryptographique par ladite carte à puce (5) ;
envoyer ladite commande de chargement vers ledit boîtier décodeur (207) ;
charger ladite carte à puce (5) par ladite indication de la valeur de chargement ; et
envoyer une information de confirmation vers ledit serveur de banque (860), par laquelle ledit serveur de banque (860) est assuré que ledit chargement est un succès.
dans lequel ledit réseau (202) est l'Internet à travers lequel se produisent lesdites étapes décrites dudit procédé, dans lequel ledit serveur de banque (860) comprend un site Internet de banque destiné à accepter une demande de chargement, et dans lequel ledit serveur (204) de tête de réseau et ledit serveur de banque (860) se situent à des emplacements séparés,
le procédé comprenant en outre les étapes consistant à :
émuler des commandes du module de sécurité qui sont envoyées vers ladite carte à puce (5) associée avec ledit serveur (204) de tête de réseau ; et
grouper des réponses aux dites commandes du module de sécurité dans ladite demande de chargement de telle sorte que lesdites réponses puissent être envoyées comme un groupe vers ledit serveur de chargement (862) pour réduire le trafic du réseau entre ledit serveur de chargement (862) et ledit serveur (204) de tête de câble.

9. Procédé tel que décrit dans la revendication 8, comprenant en outre les étape consistant à :
envoyer un résultat d'une interaction entre ladite carte à puce (5) et un lecteur de carte (210) associé avec ledit boîtier décodeur (207) vers ledit serveur (204) de tête de réseau ; et
construire ladite demande de chargement audit serveur (204) de tête de réseau.

10. Procédé tel que décrit dans la revendication 8 ou 9, dans lequel ladite information de confirmation comprend un message de confirmation crypté illisible par ledit serveur (204) de tête de réseau, ledit procédé comprenant en outre l'étape consistant à :
recevoir ledit message de confirmation crypté venant dudit serveur de chargement (862).
